(19) Europäisches Patentamt
European Patent Office
Office européen des brevets

(11) **EP 4 411 952 A1**

(12) **EUROPEAN PATENT APPLICATION**
published in accordance with Art. 153(4) EPC

(43) Date of publication:
**07.08.2024   Bulletin 2024/32**

(21) Application number: 22876277.9

(22) Date of filing: **27.09.2022**

(51) International Patent Classification (IPC):
*H01M 50/293* [(2021.01)]   *H01M 10/613* [(2014.01)]
*H01M 10/623* [(2014.01)]   *H01M 10/625* [(2014.01)]
*H01M 10/647* [(2014.01)]   *H01M 10/6555* [(2014.01)]
*H01M 10/658* [(2014.01)]   *H01M 50/204* [(2021.01)]
*H01M 50/209* [(2021.01)]   *H01M 50/291* [(2021.01)]

(52) Cooperative Patent Classification (CPC):
H01M 10/613; H01M 10/623; H01M 10/625;
H01M 10/647; H01M 10/6555; H01M 10/658;
H01M 50/204; H01M 50/209; H01M 50/291;
H01M 50/293

(86) International application number:
**PCT/JP2022/036038**

(87) International publication number:
**WO 2023/054411 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021   JP 2021160489**
**25.02.2022   JP 2022027674**

(71) Applicant: **Nitto Denko Corporation
Ibaraki-shi, Osaka 567-8680 (JP)**

(72) Inventors:
• **UI, Takehiro
  Ibaraki-shi, Osaka 567-8680 (JP)**
• **SASAKI, Shu
  Ibaraki-shi, Osaka 567-8680 (JP)**
• **FUKE, Kazuhiro
  Ibaraki-shi, Osaka 567-8680 (JP)**
• **KAWAKAMI, Maho
  Ibaraki-shi, Osaka 567-8680 (JP)**

(74) Representative: **Grünecker Patent- und
Rechtsanwälte
PartG mbB
Leopoldstraße 4
80802 München (DE)**

(54) **THERMALLY INSULATING MATERIAL FOR BATTERY, AND NON-AQUEOUS ELECTROLYTE SECONDARY BATTERY**

(57)     A thermal insulation material for a battery of the present invention includes a compression adjustment layer and a thermal insulation layer laminated to each other. A ratio of a thickness of the compression adjustment layer to a thickness of the thermal insulation layer is more than 0.5 and less than 4.5, and a compressive stress is from 0.34 MPa through 3.45 MPa when the compression adjustment layer is compressed and deformed at any rate within a range of from 25% through 70% in a thickness direction with respect to a thickness before compression.

EP 4 411 952 A1

# FIG.9

**Description**

Technical Field

The present invention relates to a thermal insulation material for a battery and a nonaqueous electrolyte secondary battery.

Background Art

Nonaqueous electrolyte secondary batteries such as lithium ion secondary batteries and the like are widely used as power sources of electric vehicles such as hybrid cars, electric cars, and the like, portable electronic devices such as portable terminals, portable phones, laptop personal computers, and the like, wearable devices, and the like. The nonaqueous electrolyte secondary batteries typically include a plurality of layers of battery cells each including a positive electrode, a negative electrode, and a nonaqueous electrolyte. In the nonaqueous electrolyte secondary batteries, battery cells expand and contract due to repeated charging and discharging. Because of this, a thermal insulation material for a battery is provided between the battery cells in order to minimize contact between adjoining battery cells and to thermally insulate between the battery cells.

As the thermal insulation material for a battery used in the nonaqueous electrolyte secondary battery, for example, a spacer is disclosed that is configured as a corrugated plate spring, serves as a passage for a cooling medium, and has an elastic property to deform elastically in response to battery deformation and to maintain the load on the battery to be substantially constant (see, for example, PTL 1).

Citation List

Patent Literature

   [PTL 1] Japanese Patent Application Laid-Open Publication No. 2000-48867
   [PTL 2] Canadian Patent Application Publication No. 1190279

Summary of Invention

Technical Problem

With an increase in the capacity of the battery cell, the deformation amount of expansion and contraction caused by charging and discharging of the battery cell and the possibility of thermal runaway when the battery cell generates excessive heat increase. Because the spacer in PTL 1 is configured as a spring formed in a corrugated plate, there is a problem in that the spacer cannot be sufficiently deformed when the deformation amount caused by expansion of the battery cell becomes large, and there is a high possibility that the spacer will not be able to exhibit a cushioning property. In addition, there is a problem in that it is not possible to sufficiently thermally insulate the battery cell that has experienced thermal runaway.

As a reference value of the pressure at which the lithium ion secondary battery operates at high efficiency, for example, it is described in PTL 2 that "LIB efficiency is improved at pressures of from 50 psi (0.34 MPa) through 500 psi (3.45 MPa) compared to no pressurization".

It is an object of an aspect of the present invention to provide a thermal insulation material for a battery that exhibits an excellent cushioning property against expansion of the battery cell and has a high thermal insulation property.

Solution to Problem

According to an aspect of the present invention, a thermal insulation material for a battery includes a compression adjustment layer and a thermal insulation layer laminated to each other. A ratio of a thickness of the compression adjustment layer to a thickness of the thermal insulation layer is more than 0.5 and less than 4.5, and a compressive stress is from 0.34 MPa through 3.45 MPa when the compression adjustment layer is compressed and deformed at any rate within a range of from 25% through 70% in a thickness direction with respect to a thickness before compression.

Advantageous Effects of Invention

According to an aspect of the present invention, a thermal insulation material for a battery exhibits an excellent cushioning property against expansion of the battery cell and has a high thermal insulation property.

Brief Description of Drawings

[FIG. 1] FIG. 1 is a perspective view illustrating a thermal insulation material for a battery according to an embodiment of the present invention.
[FIG. 2] FIG. 2 is a cross-sectional view taken along a line I-I of FIG. 1.
[FIG. 3] FIG. 3 is a plan view of FIG. 1.
[FIG. 4] FIG. 4 is a diagram illustrating an example of a relationship between compression time and residual stress.
[FIG. 5] FIG. 5 is a cross-sectional view illustrating an example of another configuration of a thermal insulation material for a battery.
[FIG. 6] FIG. 6 is a cross-sectional view illustrating an example of another configuration of a thermal insulation material for a battery.
[FIG. 7] FIG. 7 is a cross-sectional view illustrating an example of another configuration of a thermal insulation material for a battery.
[FIG. 8] FIG. 8 is a perspective view illustrating an example of a lithium ion secondary battery.
[FIG. 9] FIG. 9 is a partial cross-sectional view of a lithium ion secondary battery.
[FIG. 10] FIG. 10 is a diagram illustrating the relationship between stress relaxation rate (%) and elapsed time of the thermal insulation material for a battery of Example 28.

Description of Embodiments

Embodiments of the present invention will be described in detail below. To facilitate understanding of the description, the same components in the drawings are denoted by the same reference numerals, and overlapping descriptions of the same components will be omitted. The components in the drawings may not be to scale. In the present specification, "through" indicating numerical ranges means that the values specified before and after "through" are included as the lower limit and the upper limit, unless otherwise particularly specified.

<Thermal Insulation Material for a battery>

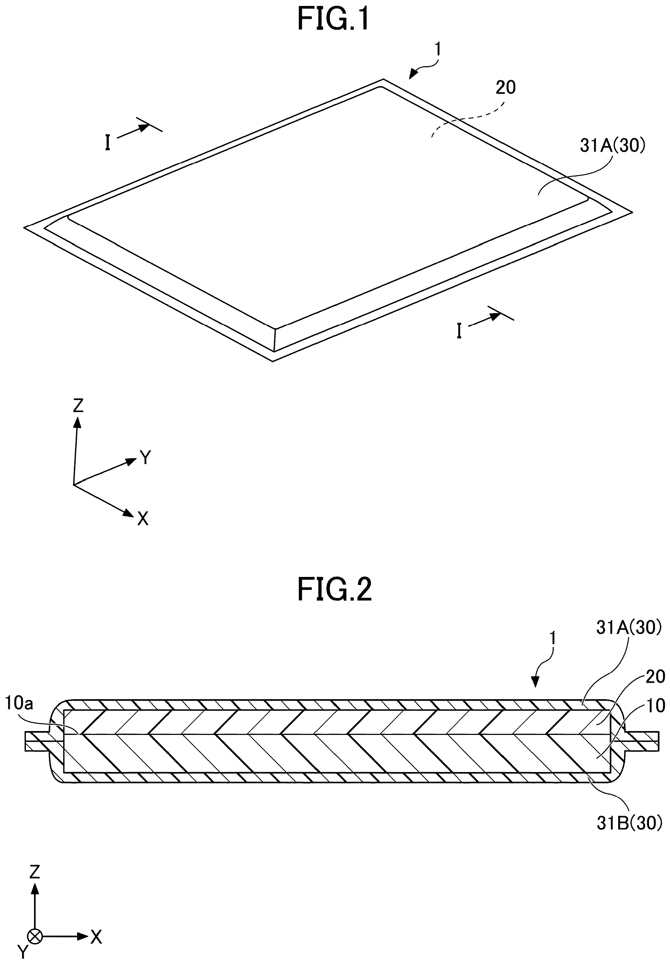

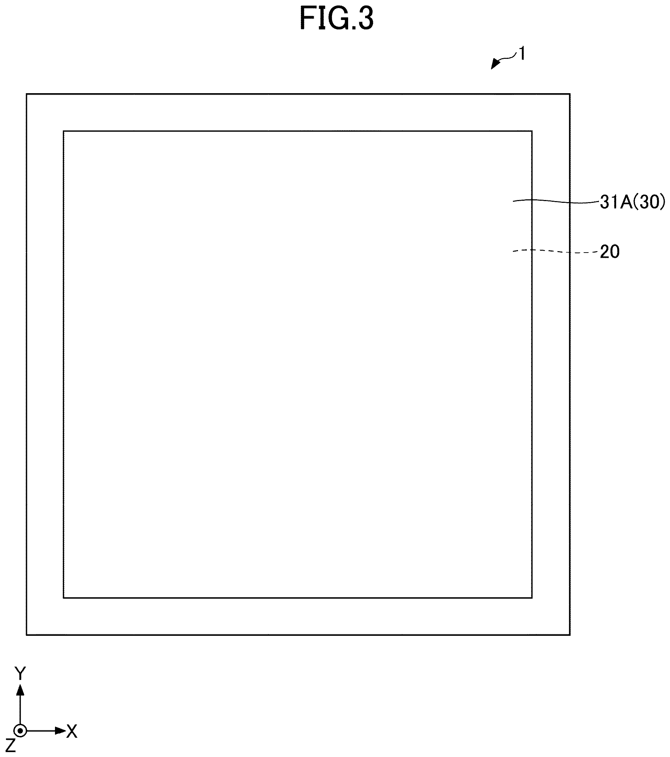

A thermal insulation material for a battery according to an embodiment of the present invention will be described. FIG. 1 is a perspective view illustrating a thermal insulation material for a battery according to the present embodiment. FIG. 2 is a cross-sectional view taken along a line I-I of FIG. 1. FIG. 3 is a plan view of FIG. 1. As illustrated in FIGS. 1 and 2, a thermal insulation material 1 for a battery according to the present embodiment may include a compression adjustment layer 10 and a thermal insulation layer 20 laminated in this order, and may include a cover layer 30 that covers the compression adjustment layer 10 and the thermal insulation layer 20. The thermal insulation material 1 for a battery is formed in a sheet shape. As illustrated in FIG. 3, the thermal insulation material 1 for a battery is substantially rectangular in a plan view.

In the present specification, the direction of the thickness (vertical direction) of the thermal insulation material 1 for a battery is defined as the Z-axis direction, and transverse directions (horizontal directions) orthogonal to the direction of the thickness are defined as the X-axis direction and the Y-axis direction. In the Z-axis direction, the direction to the side of the thermal insulation layer 20 is defined as the +Z-axis direction and the direction to the side of the compression adjustment layer 10 is defined as the -Z-axis direction. In the following description, for expediency of description, the +Z-axis direction will be described as upper or above, and the -Z-axis direction will be described as lower or below. These terms do not represent an absolute relationship in height.

The inventors of the present application focused on the relationship between the thickness of the compression adjustment layer 10 and the thermal insulation layer 20 of the thermal insulation material 1 for a battery and the cushioning property when the compression adjustment layer 10 is compressed, in considering the application of the thermal insulation material 1 for a battery to a nonaqueous electrolyte secondary battery, to cushion against the expansion of the battery cell that is becoming higher capacity, and to thermally insulate the heat generated from the battery cell more appropriately. The inventors of the present application found that when the ratio of the thickness of the compression adjustment layer 10 to the thickness of the thermal insulation layer 20 is within a range of more than 0.5 and less than 4.5, and when the compressive stress is within a range of from 0.34 MPa through 3.45 MPa when the compression adjustment layer 10 is compressed and deformed at any rate within a range of from 25% through 70% in the thickness direction with respect to the thickness before compression, the thermal insulation material 1 for a battery can flexibly deform against external stress and can be improved in the thermal insulation property. Thus, the thermal insulation material 1 for a battery can have a high thermal insulation property while increasing a cushioning property against expansion of the battery cell.

The thickness of the compression adjustment layer 10 and the thermal insulation layer 20 is the thickness measured at any location in the cross section of the compression adjustment layer 10 and the thermal insulation layer 20. When several locations are measured at any location in the cross section of the compression adjustment layer 10 and the thermal insulation layer 20, the average value of the thickness of these measurement locations may be used.

The compressive stress of the compression adjustment layer 10 may be measured by using a precision universal tester and measuring the compressive stress when a test specimen is compressed at a predetermined compression rate (for example, 0.5 mm/min) at any rate within the range of from 25% through 70% in the thickness direction with respect to the thickness before compression.

The thermal insulation property refers to the property to reduce the conduction of heat. The thermal insulation property may be evaluated by measuring thermal conductivity. The thermal conductivity is determined by measuring thermal conductivity at 80°C under 2 MPa in accordance with "JIS A 1412-1:2016 Method for measuring thermal resistance and thermal conductivity of thermal insulation materials-Section 2: Heat flow meter method (HFM method)". The thermal insulation material 1 for a battery is cut to a predetermined size (for example, 20 mm×20 mm) to prepare a sample, and also a reference sample is prepared. As the reference sample, for example, a calcium silicate plate ("HILUC", manufactured by A&A Material Corporation, thickness: 5 mm, thermal conductivity: 0.22 W/(m-K)) or the like may be used. Next, a first thermocouple, an aluminum plate, the thermal insulation material 1 for a battery, an aluminum plate, a second thermocouple, the reference sample, and a third thermocouple are placed in this order in the descending order on the surface of a lower board of a pneumatic press machine, and tightly contacted with each other. The load of the press machine, of which the upper board is heated to a predetermined temperature (for example, 80°C) and the lower board is heated to a predetermined temperature (for example, 35°C), may be adjusted to be a predetermined load (for example, 800 N (corresponding to 2 MPa)), and then pressurization may be performed. The measurement is continued in the heating-pressurizing state until the temperatures detected by the thermocouples have stabilized. The temperature stabilization may be defined as the temperature change over an around 10-minute continuous period of time being within a predetermined range (for example, within ±0.1°C). A thermal conductivity k1 of the thermal insulation material 1 for a battery can be obtained according to a formula (I) below based on the temperatures detected by each thermocouple after the temperature stabilization, the thickness of the thermal insulation material 1 for a battery when compressed, and the thermal conductivity and thickness of the reference sample.

$$k1 = k2 \times (L1 \times \Delta T1) / (L2 \times \Delta T2) \quad \ldots (I)$$

(In the formula, k1 is the thermal conductivity [W/(m·K)] of the thermal insulation material 1 for a battery, k2 is the thermal conductivity [W/(m·K)] of the reference sample, L1 is the thickness of the thermal insulation material for a battery under pressure, L2 is the thickness of the reference sample, ΔT1 is the temperature difference between the temperature of the second thermocouple and the temperature of the third thermocouple, and ΔT2 is the temperature difference between the temperature of the first thermocouple and the temperature of the second thermocouple.)

When it is difficult to measure the thickness of the thermal insulation material 1 for a battery when compressed during pressurization, it may be calculated from the thickness of the thermal insulation material for a battery before pressurization and the compression deformation rate when compressed under a predetermined load (for example, 800 N (corresponding to 2 MPa)).

The cushioning property may be measured by using a precision universal tester and measuring the deformation distance at the compressive stresses of 0.34 MPa and 3.45 MPa when the test specimen is compressed at a predetermined compression rate (for example, 0.5 mm/min). Then, the amount of displacement within the range of from 0.34 MPa through 3.45 MPa of the compressive stress (a displacement range for 0.34 MPa through 3.45 MPa) is calculated using a formula (II) below. The amount of displacement can be evaluated as the cushioning property in the displacement range for 0.34 MPa through 3.45 MPa. By increasing the cushioning property in the displacement range for 0.34 MPa through 3.45 MPa, the charge-discharge efficiency of the lithium ion secondary battery that includes the thermal insulation material for a battery according to the present embodiment can be improved in the displacement range for 0.34 MPa through 3.45 MPa.

displacement range for 0.34 MPa through 3.45 MPa [%] = (deformation distance at 3.45 MPa/thickness of test specimen) × 100% - (deformation distance at 0.34 MPa / thickness of test specimen) × 100%   (II)

Each component constituting the thermal insulation material 1 for a battery will be described below.

As illustrated in FIG. 1, the compression adjustment layer 10 may be formed in a sheet shape and may be formed to have any softness according to the hardness of the thermal insulation layer 20. That is, the compression adjustment layer 10 may be more easily deformed by compression than the thermal insulation layer 20 or less easily deformed by compression than the thermal insulation layer 20 according to the hardness of the thermal insulation layer 20.

In the case where the thermal insulation material 1 for a battery is fixed in a housing in a state sandwiched between battery cells to form a nonaqueous electrolyte secondary battery, when one of the battery cells generates excessive heat during operation of the nonaqueous electrolyte secondary battery, the battery cell expands and its surface overhangs toward the thermal insulation material 1 for a battery, which causes stress to be applied to the thermal insulation material 1 for a battery. Therefore, one of the compression adjustment layer 10 or the thermal insulation layer 20 is more easily deformed by compression than the other, according to the hardness of the thermal insulation layer 20. That is, when the compression adjustment layer 10 is more easily deformed by compression than the thermal insulation layer 20, the compression adjustment layer 10 is easier to be deformed than the thermal insulation layer 20, and therefore, the compression adjustment layer 10 is easier to be deformed following the deformation of the surface of the battery cell. When the thermal insulation layer 20 is more easily deformed by compression than the compression adjustment layer 10, the thermal insulation layer 20 is easier to be deformed than the compression adjustment layer 10, and therefore, the thermal insulation layer 20 is easier to be deformed following the deformation of the surface of the battery cell. Therefore, because the thermal insulation material 1 for a battery includes the compression adjustment layer 10 and the thermal insulation layer 20, it is possible to effectively reduce the occurrence of damage or the like of the battery cell due to excessive limitation of the expansion of the battery cell.

For example, in the case where a thermal insulation material for a battery includes only a thermal insulation layer that is less easily deformed by compression and the thermal insulation material is placed between the battery cells, when the battery cell generates excessive heat, the battery cell cannot expand toward the thermal insulation material for a battery, and the battery cell may rupture and be damaged. In contrast, because the compression adjustment layer 10 and the thermal insulation layer 20 are placed between the battery cells, the battery cell surface can deform one of the compression adjustment layer 10 and the thermal insulation layer 20 and expand toward the other of the compression adjustment layer 10 and the thermal insulation layer 20, thereby reducing the damage or the like of the battery cell.

The compressive stress when the compression adjustment layer 10 is compressed at any rate within a range of from 25% through 70% in the thickness direction with respect to the thickness before compression is from 0.34 MPa through 3.45 MPa, preferably from 1.00 MPa through 3.00 MPa, and more preferably from 1.50 MPa through 2.50 MPa. When the compressive stress of the compression adjustment layer 10 is less than 0.34 MPa, the cushioning property of the compression adjustment layer 10 is not sufficient, and a constant load cannot be stably applied to the battery cell. In addition, when the compression adjustment layer 10 is deformed, the thickness of the deformed part becomes thin, and the thermal insulation property may be reduced. When the compressive stress of the compression adjustment layer 10 is higher than 3.45 MPa, the expansion of the battery cell cannot be sufficiently cushioned, and the battery cell may be damaged.

The compressive stress when the compression adjustment layer 10 is compressed at any rate within the range of from 25% through 70% in the thickness direction with respect to the thickness before compression changes because after assembly into the nonaqueous electrolyte secondary battery, stress is applied to the thermal insulation material for a battery from the start of use to the end of use, and the compressive stress of the compression adjustment layer changes due to the relaxation phenomenon. Therefore, the compressive stress may be a residual stress when compressed at any rate within the range of from 25% through 70% in the thickness direction with respect to the thickness before compression, and the compression rate is maintained for a time more than 0 hours and 87,600 hours or less (assuming that the period from the start of use to the disposal of the battery is 10 years). To measure the residual stress, a compression adjustment layer or a thermal insulation layer is cut into a 10 mm square with a predetermined thickness and used as a test specimen, and the test specimen is compressed at a compression rate of 0.5 mm/min using a precision universal tester (Autograph AGS-5kNX, manufactured by Shimadzu Corporation). When the test specimen is compressed at any rate within the range of from 25% through 70%, the compression is stopped, and the compression rate is maintained for a time more than 0 hours and 87,600 hours or less. The stress in the maintained state for a time more than 0 hours and 87,600 hours or less is measured, and the stress is defined as the residual stress.

In the case where it is difficult to perform the procedure due to the long period of standing time, the residual stress may be obtained by estimating the residual stress in the maintained state for a time more than 20 hours and 87,600 hours or less by the following method, for example.

((Example of Residual Stress Estimation Method))

A compression adjustment layer or a thermal insulation layer is cut into a 10 mm square with a predetermined thickness and used as a test specimen. The test specimen is compressed at a compression rate of 0.5 mm/min using a precision universal tester (Autograph AGS-5kNX, manufactured by Shimadzu Corporation). When the load becomes 100 N, the compression is stopped, and the measurement of the compressive stress is started. The compressive stress is continuously measured at regular time intervals, for example, every 1 minute, every 10 minutes, or every 1 hour, until 20 hours have elapsed. The obtained compressive stress value at each elapsed time is divided by 100 N to obtain the stress relaxation rate (%) as indicated in the following formula (III).

$$\text{stress relaxation rate (\%)} = \text{stress at each elapsed time (N)} / 100\text{ N} \qquad \text{(III)}$$

The relationship between the elapsed time and the stress relaxation rate can be created using Microsoft Excel spreadsheet software. A graph can be created by selecting the elapsed time and the stress relaxation rate listed in the table, and then selecting Insert, Graph, and Scatter Plot. Next, the relaxation curve displayed on the graph is selected, the context menu is opened, and Add Approximate Curve (R) is selected. From the Approximate Curve options, the approximate expression that fits the stress relaxation curve is selected and the "Show Formula on Graph (E)" checkbox is checked. By substituting a time more than 20 hours and 87,600 hours or less for (x) in the displayed equation of the approximate curve, the stress relaxation rate (%) can be obtained.

Finally, as indicated in the formula (IV) below, by multiplying the obtained stress relaxation rate by the compressive stress at any rate within the range of from 25% through 70% in the thickness direction with respect to the thickness before compression, an estimate of the residual stress (MPa) at a time more than 20 hours and 87,600 hours or less can be obtained.

$$\text{estimate of residual stress (MPa)} = \text{stress relaxation rate (\%)} \times \text{compressive stress (MPa)} \qquad \text{(IV)}$$

The thermal conductivity of the compression adjustment layer 10 at 80°C under 2 MPa may be higher than the thermal conductivity of the thermal insulation layer 20 at 80°C under 2 MPa, and is preferably from 0.04 W/(m·K) through 0.4 W/(m·K), for example.

The thermal conductivity of the compression adjustment layer 10 at 80°C under 2 MPa is preferably 20% or more of the thermal conductivity of the thermal insulation layer 20 at 80°C under 2 MPa.

The thermal conductivity of the compression adjustment layer 10 at 80°C under 2 MPa can be measured by a method in accordance with "JIS A 1412-1:2016 Method for measuring thermal resistance and thermal conductivity of thermal insulation materials-Section 2: Heat flow meter method (HFM method)" as in the case of measuring the thermal conductivity of the thermal insulation material 1 for a battery.

The material of the compression adjustment layer 10 is not particularly limited as long as it is easily deformed by compression and exhibits the cushioning property. Examples of the compression adjustment layer 10 include a molded body of fiber, rubber, or thermoplastic resin, and the like.

The molded body of fiber (a fiber molded body) is obtained by molding fiber. Examples of the fiber include inorganic fiber such as glass wool and rock wool; felt made of cellulose fiber, polyester, or polypropylene; and the like. In order to achieve the compressive stress within the range of from 0.34 MPa through 3.45 MPa when the compression adjustment layer 10 is compressed and deformed at any rate within the range of from 25% through 70% in the thickness direction with respect to the thickness before compression, the mass of the fiber used for forming the compression adjustment layer 10 is preferably from 140 kg/m$^3$ through 533 kg/m$^3$. In addition, among the fibers, the glass wool is preferably cured with a thermosetting resin in order to increase the compressive stress. As for the glass wool alone, it is preferable that the fiber diameter is from 3 um through 13 um and the fiber length is from 5 mm through 200 mm.

The molded body of rubber (a rubber molded body) is obtained by molding rubber. Examples of the rubber include styrene-butadiene rubber, butadiene rubber, chloroprene rubber, isoprene rubber, butyl rubber, ethylene propylene rubber, nitrile rubber, silicone rubber, fluorine rubber, acrylic rubber, urethane rubber, polysulfide rubber, epichlorohydrin rubber, and the like. These may be used alone or in combination of two or more. Asker C hardness of the rubber molded body is preferably 53 or less. When Asker C hardness is higher than 53, the thermal insulation layer may be destroyed during compression. Asker C hardness is measured using an Asker rubber hardness tester type C indenter based on the hardness measurement method described in JIS K7312:1996.

The molded body of thermoplastic resin (a resin molded body) is obtained by molding a thermoplastic resin or a thermosetting resin.

Examples of the thermoplastic resin include polyurethane, polyethylene, polystyrene, polypropylene, ethylene vinyl acetate copolymer, and the like. These resins may be used alone or in combination of two or more. The resin molded body is preferably a resin foamed body formed by foam molding using the thermoplastic resin to form independent or continuous bubbles. Because the resin foamed body has bubbles inside and on the surface, it is easily deformed by compression and exhibits the cushioning property. In order to achieve the compressive stress within the range of from 0.34 MPa through 3.45 MPa when the resin foamed body is compressed and deformed at any rate within the range of from 25% through 70% in the thickness direction with respect to the thickness before compression, it is preferable that the cell structure constituting the resin foamed body has an independent foam structure, the material used for forming the resin foamed body has a crosslinked structure, and the material itself has a modulus of compressive elasticity of from 700 MPa through 72,000 MPa. In order to achieve the compressive stress within the range of from 0.34 MPa through 3.45 MPa when the resin foamed body is compressed and deformed at any rate within the range of from 25% through 70% in the thickness direction with respect to the thickness before compression, it is preferable that the reinforcing structure of the resin foamed body has a corrugated shape in which stress is dispersed and buckling does not readily occur, rather than a square cross-section shape in which stress is easily concentrated. In addition, in order to prevent the cushion layer from burning and reducing the thermal insulation property in the event of the lithium ion battery combustion, the thermal insulation layer is preferably flame-retardant (for example, V-0 in UL94, a UL flame-retardant standard), and more preferably non-flammable.

Examples of the thermosetting resin include urethane resin, phenol resin, urea resin, melamine resin, unsaturated polyester, epoxy resin, silicone resin, and the like. The resins may be used alone or in combination of two or more.

The thickness of the compression adjustment layer 10 is preferably from 1.0 mm through 8.8 mm, more preferably from 1.5 mm through 7.5 mm, and more preferably from 2.0 mm through 5.0 mm. When the thickness of the compression adjustment layer 10 is from 1.0 mm through 8.8 mm, when the thermal insulation material 1 for a battery is fixed in a housing in a state sandwiched between battery cells to form a nonaqueous electrolyte secondary battery, the stress applied to the battery cells when the battery cells expand can be sufficiently absorbed.

The ratio of the thickness of the compression adjustment layer 10 to the thickness of the thermal insulation layer 20 is more than 0.5 and less than 4.5. When the ratio of the thickness of the compression adjustment layer 10 to the thickness of the thermal insulation layer 20 is 0.5 or less, the deformation from external sources cannot be sufficiently absorbed. Therefore, when the nonaqueous electrolyte secondary battery is constituted by fixing the thermal insulation material 1 for a battery in the housing in a state where it is sandwiched between the battery cells, the expansion of the battery cell caused when the battery cell is charged cannot be sufficiently absorbed, and the stress applied to the battery cell may become too high, thereby damaging the battery cell. When the ratio of the thickness of the compression adjustment layer 10 to the thickness of the thermal insulation layer 20 is 4.5 or more, the compression adjustment layer 10 becomes too thick relative to the thermal insulation layer 20. Because the compression adjustment layer 10 has a higher thermal conductivity than the thermal insulation layer 20, the thermal insulation property of the thermal insulation material 1 for a battery decreases. Therefore, when the nonaqueous electrolyte secondary battery is constituted by fixing the thermal insulation material 1 for a battery in the housing in a state where it is sandwiched between the battery cells, the thermal insulation material 1 for a battery cannot sufficiently thermally insulate the heat when the battery cell expands thermally.

The shape of the compression adjustment layer 10 is not particularly limited as long as it is suitable for deforming appropriately in response to the expansion and contraction of the battery cell when the nonaqueous electrolyte secondary battery is constituted by fixing the thermal insulation material 1 for a battery in the housing in a state where it is sandwiched between the battery cells, but for example, the shape is preferably a planar shape. In this case, the shape of the compression adjustment layer 10 in a plan view may be rectangular (for example, a polygon such as a rectangle), circular, elliptical, or any other shape.

As illustrated in FIG. 2, the thermal insulation layer 20 is provided on an upper surface 10a of the compression adjustment layer 10. The thermal insulation layer 20 is formed in a sheet shape, has a function of reducing the transfer of heat transmitted to the thermal insulation material 1 for a battery in the thickness direction, that is, the thermal insulation property, and may have any softness and the cushioning property.

The thermal conductivity of the thermal insulation layer 20 is not particularly limited as long as it is lower than the thermal conductivity of the compression adjustment layer 10 at 80°C under 2 MPa, but the thermal conductivity of the thermal insulation layer 20 at 23°C is preferably 0.3 W/(m-K) or less. When the thermal conductivity of the thermal insulation layer 20 is the upper limit described above or less, the thermal insulation property can be provided. The lower limit of the thermal conductivity of the thermal insulation layer 20 is not limited, but may be, for example, 0.010 W/K·m or more. The thermal conductivity of the thermal insulation layer 20 can be measured in the same manner as the thermal conductivity of the compression adjustment layer 10.

The thermal resistance of the thermal insulation layer 20 is not particularly limited, but is preferably 0.025 (K·m²)/W or more. The upper limit of the thermal resistance of the thermal insulation layer 20 is not limited, but may be, for example, 0.1 (K·m²)/W or less.

The compressive stress of the thermal insulation layer 20 can be appropriately designed to any magnitude according to the hardness of the thermal insulation layer 20, and is preferably, for example, from 0.25 MPa through 14.00 MPa. When the compressive stress of the thermal insulation layer 20 is within the preferred range described above, a constant load can be applied to the battery cell together with the compression adjustment layer 10, the expansion of the battery cell can be sufficiently cushioned, and the damage of the battery cell can be reduced.

When the thermal insulation layer 20 is harder than the compression adjustment layer 10, the compressive stress of the thermal insulation layer 20 is higher than that of the compression adjustment layer 10 in the low compression region (for example, a displacement range for 0.34 MPa through 3.45 MPa). When the thermal insulation layer 20 is softer than the compression adjustment layer 10, the compressive stress of the thermal insulation layer 20 is lower than that of the compression adjustment layer 10 in the low compression region.

The compressive stress of the thermal insulation layer 20 can be obtained in the same manner as that of the compression adjustment layer 10 as described above.

The compressive stress of the thermal insulation layer 20, as with the compression adjustment layer 10, may be the compressive stress when the thermal insulation layer 20 is compressed at any rate within the range of from 25% through 70% in the thickness direction with respect to the thickness before compression.

The thickness of the thermal insulation layer 20 may be set appropriately, but preferably, for example, from 0.8 mm through 5.0 mm. When the thickness of the thermal insulation layer 20 is within the preferred range described above, the thermal insulation property can be enhanced and the size of the thermal insulation material 1 for a battery can be reduced.

The thermal insulation layer 20 is not particularly limited as long as it is a molded body having the desired thermal insulation property, but is preferably a porous body. The porous body is not particularly limited, but is, for example, a fiber body, a foamed body, and the like.

The fiber body contains fiber. The fiber body may be produced by either a dry method or a wet method.

The fiber contained in the fiber body is not particularly limited as long as it can be applied to the thermal insulation layer 20, but at least one of inorganic fiber and organic fiber may be used, and the fiber body preferably contains the inorganic fiber.

Examples of the inorganic fiber include, but are not particularly limited to, silica fiber, glass fiber, alumina fiber, silica-alumina fiber, silica-alumina-magnesia fiber, bio-soluble inorganic fiber, glass fiber, zirconia fiber, silicate alkaline earth metal salt fiber, alkaline earth silicate (AES) wool, glass wool, rock wool, basalt fiber, and the like. These may be used alone or in combination of two or more.

Examples of the organic fiber include, but are not particularly limited to, aramid fiber, polyester fiber, polyethylene fiber, polypropylene fiber, polyvinyl chloride fiber, fluororesin fiber, nylon fiber, rayon fiber, acrylic fiber, polyolefin fiber, and the like. These may be used alone or in combination of two or more.

The average fiber length of the fiber is not particularly limited as long as the thermal insulation property can be provided, but is preferably, for example, from 0.05 mm through 50 mm.

The average fiber diameter of the fiber is not particularly limited as long as the thermal insulation property can be provided, but is preferably, for example, from 0.1 um through 50 um.

The fiber content of the fiber body constituting the thermal insulation layer 20 is not particularly limited as long as the thermal insulation property can be provided, but is preferably, for example, from 70 mass% through 99.5 mass%. When the fiber contains the inorganic fiber and the organic fiber, the fiber content of the fiber body is the sum of the content of the inorganic fiber and the organic fiber.

The fiber body may contain inorganic particles capable of reducing thermal radiation. The inorganic particles may be any inorganic particles as long as they can reduce heat transfer due to radiation, but for example, inorganic particles having an absorption peak in the infrared region can be used. The absorption peak in the infrared region can be measured by an infrared spectrophotometer. The inorganic particles may function as a binder for binding fibers together. When the fiber body contains the inorganic particles, the fiber body may be made of a compression molded body of a mixture containing the fiber and the inorganic particles.

Specific examples of materials of the inorganic particles include silica, titanium oxide, silicon carbide, titanic iron (ilmenite, FeTiO), zirconium silicate, iron II, III oxide (wustite (FeO), magnetite ($Fe_3O_4$), hematite ($Fe_2O_3$)), chromium dioxide, zirconium oxide, manganese dioxide, zirconia sol, titania sol, silica sol, alumina sol, bentonite, kaolin, and the like.

Examples of the silica include silica produced by a dry process and silica produced by a wet process. Examples of the silica produced by the dry process include fumed silica. Examples of silica particles produced by the wet process include colloidal silica, precipitated silica, silica gel, and the like. Examples of the colloidal silica include anionic colloidal silica, cationic colloidal silica, and the like. The precipitated silica refers to silica having a mesopore structure of a powder of approximately ten microns obtained by synthesizing solid silica from a weakly alkaline to neutral aqueous solution, filtering, washing with water, and drying. Further processing may be added, such as grinding, granulation, calcination, classification, and the like. As the silica gel, it is preferable to use silica aerogel or silica xerogel, which has a particularly low density. The silica aerogel is a silica gel having a porous structure of several tens of nanometers, with a high percentage of voids to volume, typically 90% or more. In the silica aerogel, heat transfer by conduction in the solid part is low, and conduction and convection by gases are low because the movement of the molecules of the air component inside is hindered. Therefore, the silica aerogel has low thermal conductivity.

The fiber body may contain one type of inorganic particle or multiple types of inorganic particles.

The fiber body may be formed, for example, by a compression molded body made of a mixture of the fiber and the inorganic particles. When the inorganic fiber is used as the fiber and the silica is used as the inorganic particles, the fiber body may be a compression molded body made of a mixture containing the inorganic fiber and the fumed silica. When the silica fiber or the glass fiber is used as the inorganic fiber, the fiber body may be a compression molded body made of a mixture containing the silica fiber or the glass fiber and the fumed silica.

The fiber body may contain a binder. Examples of the binder include a thermoplastic resin, a thermosetting resin, a saccharide, and the like. These binders may be used alone or in combination of two or more. The binder content in the fiber body is not particularly limited as long as it is within the range where the thermal insulation property can be provided, and the binder content may be appropriately set to any content.

The fiber body may be formed of, for example, a compression molded body made of a mixture of the fiber, the inorganic particles, and the binder.

Examples of the foamed body include urethane foam, phenol foam, polyethylene foam, polystyrene foam, silicone foam, and the like.

The foamed body may contain the inorganic particles, in the same manner as the fiber body. As the inorganic particles, the inorganic particles similar to those contained in the fiber body may be contained. Therefore, the details of the inorganic particles are omitted. The content of the inorganic particles contained in the fiber body may be appropriately set to any content.

The density of the thermal insulation layer 20 is not particularly limited, but may be, for example, from 0.20 $g/cm^3$ through 0.45 $g/cm^3$.

The porosity of the foamed body by Archimedes method is not particularly limited and may be appropriately set to any porosity, but is preferably, for example, from 30% through 90% from the viewpoint of ensuring the thermal insulation property of the thermal insulation layer 20.

The shape of the thermal insulation layer 20 is not particularly limited as long as it is suitable for thermally insulating the surface of the battery cell, in the same manner as the compression adjustment layer 10, when the nonaqueous electrolyte secondary battery is constituted by fixing the thermal insulation material 1 for a battery in the housing in a state where it is sandwiched between the battery cells, but for example, the shape is preferably a planar shape. In this case, the shape of the thermal insulation layer 20 in a plan view may be rectangular (for example, a polygon such as a rectangle), circular, elliptical, or any other shape.

As illustrated in FIGS. 1 and 2, the cover layer 30 covers the surfaces of the compression adjustment layer 10 and the thermal insulation layer 20 exposed to the outside, and seals the compression adjustment layer 10 and the thermal insulation layer 20, with the layers contained inside. By covering the compression adjustment layer 10 and the thermal insulation layer 20 by the cover layer 30, even when the thermal insulation layer 20 contains the inorganic particles such as silica, it is possible to prevent the inorganic particles from falling out from the cross section of the thermal insulation layer 20. The cover layer 30 may cover only the thermal insulation layer 20.

As illustrated in FIG. 2, the cover layer 30 may be formed by welding or bonding the peripheral edges of resin films 31A and 31B that are formed in a pair of sheets. The cover layer 30 may also be formed by folding a sheet of resin film 31A or resin film 31B and welding or bonding the peripheral edges.

The resin films 31A and 31B may have a layer made of a polyethylene terephthalate (PET) or polyimide (PI) film, and may also have a layer made of a heat seal resin. The layer made of the heat seal resin may be provided at least at the periphery of the resin films 31A and 31B.

Examples of the heat seal resin include polyethylene (PE), polypropylene (PP), and the like.

Preferably, the resin films 31A and 31B have only a layer made of a PET film, or a laminated body of a layer of the PET film and a layer of the heat seal resin.

The thickness of the cover layer 30 is not particularly limited, and may be appropriately set to any thickness.

It is preferable that the thermal insulation material 1 for a battery has a predetermined residual stress rate and a residual stress, even when the stress is applied from the outside. In the present embodiment, it is preferable that the thermal insulation material 1 for battery satisfies the following conditions: when the first time satisfying the following formula (1) is set as a first standing time when the compression time applying the stress of 100 N is from 0 through 19 hours, the residual stress rate calculated by the

following formula (2) is 90% or more, and the residual stress after 20 hours with respect to the compression time is 0.34 MPa or more.

$$\text{(residual stress after n hours - residual stress after (n + 1) hours) / 1 hour} \leq 1 \qquad (1)$$

$$\text{residual stress rate [\%] = (residual stress after 20 hours with respect to compression time) / (residual stress at first standing time)} \times 100 \qquad (2)$$

(In the formula (1), n is an integer of from 1 through 19.)

The residual stress rate is more preferably 910 or more, and further preferably 93% or more. The residual stress after 20 hours with respect to the compression time is more preferably 0.35 MPa or more, and further preferably 0.40 MPa or more.

The residual stress rate is determined as follows. The thermal insulation material 1 for a battery is cut to a predetermined size to obtain a test specimen, the test specimen is compressed at a predetermined compression rate (for example, 0.5 mm/min) using a precision universal tester, and the compression is stopped when the load becomes 100 N. While maintaining the state, the stresses at the first standing time and after 20 hours are measured, and the residual stress rate is calculated using the above formula (2).

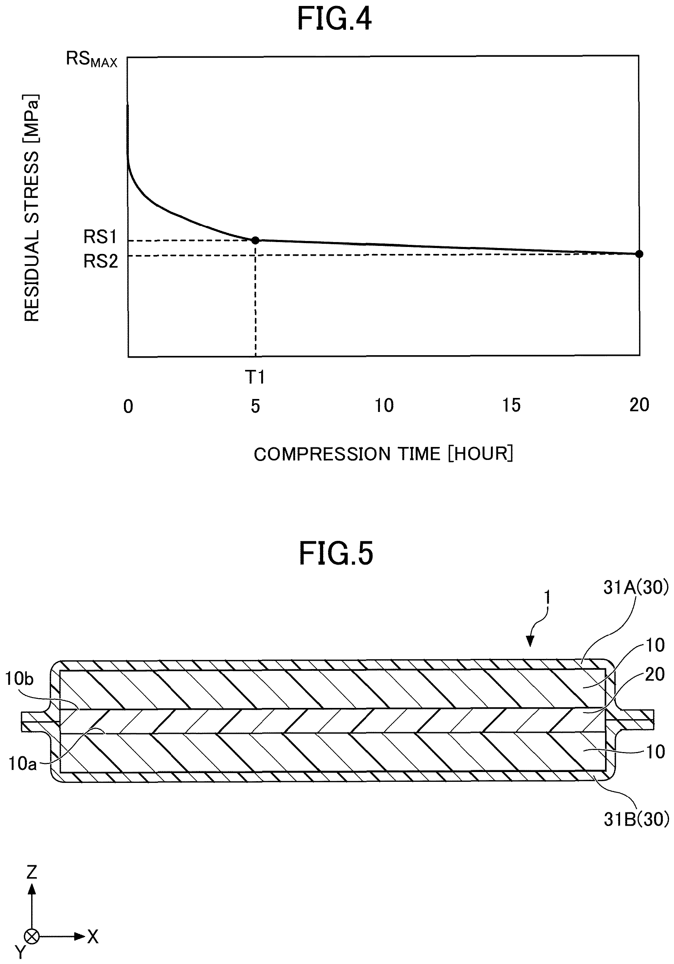

An example of the relationship between the compression time and the residual stress is illustrated in FIG. 4. In FIG. 4, the residual stress $RS_{MAX}$ is maximum when a predetermined stress (for example, 100 N) is applied to the thermal insulation material 1 for a battery, that is, when the compression time is 0 hours. As illustrated in FIG. 4, the residual stress decreases as the compression time increases, and the rate of decrease of the residual stress represents the rate of relaxation of the compressive stress. When the residual stress ratio obtained from the residual stress RS1 at the first standing time T1 and the residual stress RS2 20 hours with respect to the compression time is 90% or more, it means that the rate of decrease of the residual stress from the first standing time T1 to after 20 hours is kept low. Therefore, when the nonaqueous electrolyte secondary battery is constituted by fixing the thermal insulation material 1 for a battery in the housing in a state where it is sandwiched between the battery cells, the thermal insulation material 1 for a battery can stably apply pressure to the battery cells for a long period of time.

The residual stress rate of the thermal insulation material 1 for a battery may be evaluated by a method other than the method of calculating the residual stress rate using the above formula (2). Examples of the other evaluation method includes a method of evaluating whether or not the rate of change in the thickness of the thermal insulation material 1 for a battery is less than a predetermined value (for example, 3%) when a weight is placed continuously for a predetermined period (for example, 30 days) so that a compressive load of 0.34 MPa is applied under an environment of 23°C±3°C.

Next, a method of manufacturing the thermal insulation material 1 for a battery will be described.

First, after the thermal insulation layer 20 is laminated on one principal surface of the compression adjustment layer 10, the resin film 31A is laminated on a principal surface of the compression adjustment layer 10 opposite to the thermal insulation layer 20 side, and the resin film 31B is laminated on the principal surface of the thermal insulation layer 20 opposite to the compression adjustment layer 10 side to form a laminated body (a lamination process).

The resin films 31A and 31B are molded so that the edges of the resin films 31A and 31B are positioned outside the edges of the compression adjustment layer 10 and the thermal insulation layer 20, in a plan view of the compression adjustment layer 10 and the thermal insulation layer 20.

Next, the edges of the resin film 31A and the edges of the resin film 31B of the laminated body are thermally welded (a welding process).

As a result, the thermal insulation material 1 for a battery is obtained in which the compression adjustment layer 10 and the thermal insulation layer 20 are sealed inside the cover layer 30.

The thermal insulation material 1 for a battery includes the compression adjustment layer 10 and the thermal insulation layer 20, wherein the ratio of the thickness of the compression adjustment layer 10 to the thickness of the thermal insulation layer 20 is more than 0.5 and less than 4.5, and the compressive stress is within a range of from 0.34 MPa through 3.45 MPa when the compression adjustment layer 10 is compressed and deformed at any rate within the range of from 25% through 70% in the thickness direction with respect to the thickness before compression. As a result, the thermal insulation material 1 for a battery can increase flexibility to the stress from the outside and maintain low thermal conductivity. Therefore, when the nonaqueous electrolyte secondary battery is constituted by fixing the thermal insulation material 1 for a battery in the housing in a state where it is sandwiched between the battery cells, the thermal insulation material 1 for a battery exhibits an excellent cushioning property against the expansion of the battery cell and has a high thermal insulation property.

Typically, in the battery cell provided in the nonaqueous electrolyte secondary battery, the internal pressure of the battery cell changes during charging and discharging, and the battery cell expands and contracts in the thickness direction and deforms. That is, in the battery cell, the internal pressure typically increases during charging compared to discharging due to temperature rise, gas generation, crystal changes at the electrode, and the like. Due to the internal pressure change of the battery cell, the battery cell expands and contracts. In particular, in a lithium ion secondary battery in which a substantial number of battery cells are laminated, it is difficult for the battery cell placed inside to dissipate heat. Thus, the degree of deformation of the expansion and contraction of the battery cell increases, making it difficult to suppress the deformation. In contrast, according to the present embodiment, in the thermal insulation material 1 for a battery, the compression adjustment layer 10 has a predetermined thickness relative to the thermal insulation layer 20 and has a compressive stress lower than that of the thermal insulation layer 20. Accordingly, the thermal insulation material 1 for a battery can flexibly deform against external stress to exhibit a cushioning effect and can be improved in the thermal insulation property.

The thermal insulation material 1 for a battery may include the cover layer 30 that covers at least the thermal insulation layer 20. Accordingly, in the thermal insulation material 1 for a battery, the thermal insulation layer 20 can be sealed at least in the cover layer 30. When the thermal insulation layer 20 contains the inorganic particles and the like, because the inorganic particles and the like tend to fall out from the cut surface of the thermal insulation layer 20, it is necessary to avoid this. In the thermal insulation material 1 for a battery, by sealing the thermal insulation layer 20 at least in the cover layer 30 and covering the cross section of the thermal insulation layer 20 with the cover layer 30, it is possible to inexpensively reduce the possibility of the inorganic particles and the like falling out from the cut surface of the thermal insulation layer 20 even when the thermal insulation layer 20 contains the inorganic particles and the like. In addition, in the thermal insulation material 1 for a battery, by reducing the falling out of the inorganic particles and the like from the thermal insulation layer 20, the deterioration of the thermal insulation layer 20 can be minimized, so that the thermal insulation property of the battery cell can be more reliably maintained.

The thermal insulation material 1 for a battery may include at least one of fumed silica, colloidal silica, precipitated silica, and silica aerogel in the thermal insulation layer 20. The fumed silica, colloidal silica, and silica aerogel can be used as the inorganic particles, have properties to reduce the thermal radiation and have high flexibility compared with other inorganic particles. Therefore, when the thermal insulation material 1 for a battery contains at least one of the fumed silica, colloidal silica, precipitated silica, and silica aerogel as the inorganic particles in the thermal insulation layer 20, the thermal insulation layer 20 can reliably exhibit the thermal insulation property, and the heat generated from the battery cell can be more reliably thermally insulated. Further, the flexibility of the thermal insulation layer 20 is improved, and the cushioning property of the thermal insulation material 1 for a battery can be enhanced.

In the thermal insulation material 1 for a battery, when the first time satisfying the above formula (1) is set as the first standing time when the compression time applying the stress of 100 N is from 0 through 19 hours, the residual stress rate calculated by the above formula (2) can be 90% or more, and the residual stress after 20 hours with respect to the compression time can be 0.34 MPa or more. In a thermal insulation material for a battery with a conventional compression adjustment layer, when the thermal insulation material for a battery is included in a nonaqueous electrolyte secondary battery, and when it is used for a long period of time, the cushioning property may be reduced due to deterioration, and the pressure may decrease. For example, suppose that when the displacement of the thermal insulation material for a battery in the thickness direction is 0.94 mm and the compressive stress of the thermal insulation material for a battery is 1 MPa, the thermal insulation material for a battery is compressed in the thickness direction at a predetermined ratio (for example, $1.8 \times 10^{-7}$ mm/min). In this case, the compression adjustment layer tends to be compressed and relaxed, and the compressive stress of the compression adjustment layer tends to decrease. Therefore, in order to stably apply a predetermined pressure to the battery cell included in the nonaqueous electrolyte secondary battery for a long time, it is desirable that the compression adjustment layer included in the thermal insulation material for a battery has a higher compressive stress even after the nonaqueous electrolyte secondary battery is used for a long time. According to the present embodiment, in the thermal insulation material 1 for a battery, the residual stress rate calculated by the formula (2) can be 90% or more, and the residual stress after 20 hours with respect to the compression time can be 0.34 MPa or more. Therefore, even when the nonaqueous electrolyte secondary battery includes the thermal insulation material 1 for a battery, and the residual stress of the compression adjustment layer 10 of the thermal insulation material 1 for a battery decreases due to long-term use of the nonaqueous electrolyte secondary battery, the relaxation of the residual stress can be reduced, so that a sufficient cushioning property can be provided while applying pressure to the battery cell. Therefore, the thermal insulation material 1 for a battery can stably exhibit an excellent cushioning property against the expansion of the battery cell while fixing the battery cell, for a long period of time.

The residual stress when the compression time is the first standing time or after 20 hours with respect to the compression time may be measured, for example, by preparing a test specimen in which the compression adjustment layer 10 is cut to a predetermined size and using a precision universal tester. The prepared test specimen is compressed at a predetermined compression rate (for example, 0.5 mm/min) using the precision universal tester, and the compression is stopped when the load becomes 100 N. While maintaining the state, the residual stresses when the compression time is the first standing time or is 20 hours are measured, and the residual stresses when the compression time is the first standing time or after 20 hours with respect to the compression time are obtained.

In both cases where the thermal insulation material 1 for a battery has a single-layer structure including only the thermal insulation layer 20 or a multi-layer structure including the compression adjustment layer 10 and the thermal insulation layer 20, when the first time satisfying the above formula (1) is set as the first standing time when the compression time applying the stress of 100 N is from 0 through 19 hours, the residual stress rate calculated by the above formula (2) is set to 90% or more, and the residual stress after 20 hours with respect to the compression time is 0.34 MPa or more. Thus, even when the thermal insulation material 1 for a battery is applied to the nonaqueous electrolyte secondary battery, and the nonaqueous electrolyte secondary battery is used for a long period of time, the decrease of the residual stress of the compression adjustment layer 10 is reduced and the relaxation of the residual stress is reduced, so that the excellent cushioning property against the expansion of the battery cell can be stably provided over the long period of time while applying pressure to the battery cell. That is, in the thermal insulation material for a battery including the conventional compression adjustment layer, as described above, when the thermal insulation material for a battery is included in the nonaqueous electrolyte secondary battery and used for a long period of time, the cushioning property may be reduced due to deterioration, and the pressure may decrease. For example, suppose that when the displacement of the thermal insulation material for a battery in the thickness direction is 0.94 mm and the compressive stress of the thermal insulation material for a battery is 1 MPa, the thermal insulation material for a battery is compressed in the thickness direction at a predetermined ratio (for example, $1.8 \times 10^{-7}$ mm/min). In this case, the compression adjustment layer tends to be compressed and relaxed, and the compressive stress of the compression adjustment layer tends to decrease. Therefore, in order to stably apply a predetermined pressure to the battery cell included in the nonaqueous electrolyte secondary battery for a long time, it is important that the compression adjustment layer included in the thermal insulation material for a battery has a higher compressive stress even after the nonaqueous electrolyte secondary battery is used for a long time. According to the present embodiment, in the thermal insulation material 1 for a battery, the residual stress rate calculated by the formula (2) is 90% or more, and the residual stress after 20 hours with respect to the compression time is 0.34 MPa or more. Therefore, even when the nonaqueous electrolyte secondary battery includes the thermal insulation material 1 for a battery, and the nonaqueous electrolyte secondary battery is used for a long period of time, the rate of decrease of the residual stress of the compression adjustment layer 10 of the thermal insulation material 1 for a battery can be reduced, and the relaxation of the residual stress can be reduced, so that a sufficient cushioning property is provided while the battery cell is maintained in a pressure-applied state. Therefore, the thermal insulation material 1 for a battery can stably exhibit an excellent cushioning property against the expansion of the battery cell for a long period of time while applying pressure to the battery cell.

Because the thermal insulation material 1 for a battery has the excellent cushioning property and the high thermal insulation property as described above, it can be effectively used as a thermal insulation member for a nonaqueous electrolyte secondary battery, especially for a lithium ion secondary battery. By using the thermal insulation material 1 for a battery as the thermal insulation member for a nonaqueous electrolyte secondary battery, the nonaqueous electrolyte secondary battery can maintain its charge/discharge characteristics for a longer period of time, and thus can have a longer life.

In the present embodiment, in the thermal insulation material 1 for a battery, a layer of one of the compression adjustment layer 10 or the thermal insulation layer 20 may be sandwiched between the layers of other of the compression adjustment layer 10 or the thermal insulation layer 20 and laminated in the thickness direction (Z-axis direction) of the thermal insulation material 1 for a battery. For example, as illustrated in FIG. 5, the thermal insulation material 1 for a battery may include the compression adjustment layer 10 on the upper surface of the thermal insulation layer 20. In this case, both the compression adjustment layer 10 and the thermal insulation layer 20 may be covered with the cover layer 30.

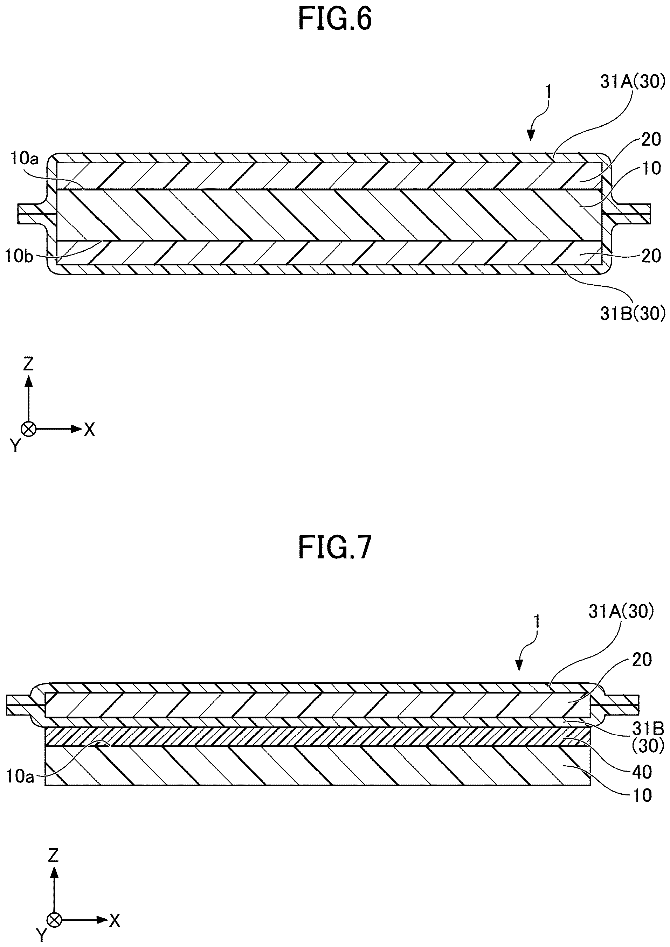

As illustrated in FIG. 6, the thermal insulation material 1 for a battery may include thermal insulation layers 20 on the upper surface 10a and on a lower surface 10b of the compression adjustment layer 10, and the compression adjustment layer 10 may be sandwiched between the thermal insulation layers 20. In this case, both the compression adjustment layer 10 and the thermal insulation layer 20 may be covered with the cover layer 30.

In the present embodiment, the thermal insulation material 1 for a battery may be configured such that a plurality of the compression adjustment layers 10 and a plurality of the thermal insulation layers 20 are laminated in the thickness direction (Z-axis direction) of the thermal insulation material 1 for a battery, and the compression adjustment layers 10 and the thermal insulation layers 20 are laminated alternately. For example, the thermal insulation material 1 for a battery may be configured such that a pair of the compression adjustment layer 10 and the thermal insulation layer 20 are laminated twice, and four layers of the compression adjustment layer 10, the thermal insulation layer 20, the compression adjustment layer 10, and the thermal insulation layer 20 are laminated in the thickness direction (Z-axis direction) of the thermal insulation material 1 for a battery.

The thermal insulation material 1 for a battery may be configured such that five layers of the compression adjustment layer 10, the thermal insulation layer 20, the compression adjustment layer 10, the thermal insulation layer 20, and the compression adjustment layer 10 are laminated in the thickness direction (Z-axis direction) of the thermal insulation material 1 for a battery, or may be configured such that five layers of the thermal insulation layer 20, the compression adjustment layer 10, the thermal insulation layer 20, the compression adjustment layer 10, and the thermal insulation layer 20 are laminated.

In the present embodiment, as illustrated in FIG. 7, only the thermal insulation layer 20 of the thermal insulation material 1 for a battery may be covered with the cover layer 30. In this case, an adhesive layer 40 is provided between the compression adjustment layer 10 and the cover layer 30. As the adhesive layer 40, common adhesives used for a thermal insulation material for a battery, a double-sided tape, or the like may be used. When the thermal insulation material 1 for a battery includes the compression adjustment layers 10 on both of the upper surface and the lower surface of the thermal insulation layer 20, and only the thermal insulation layer 20 is covered with the cover layer 30, the adhesive layer 40 is provided at each of the two boundaries between the compression adjustment layer 10 and the cover layer 30.

<Nonaqueous Electrolyte Secondary Battery>

A case where the thermal insulation material 1 for a battery according to the present embodiment is applied to a nonaqueous electrolyte secondary battery will be described. Examples of the nonaqueous electrolyte secondary battery include a lithium ion secondary battery, a nickel-hydrogen secondary battery, a nickel-cadmium secondary battery, a polymer secondary battery, and the like. In the present embodiment, a case where the nonaqueous electrolyte secondary battery is the lithium ion secondary battery will be described.

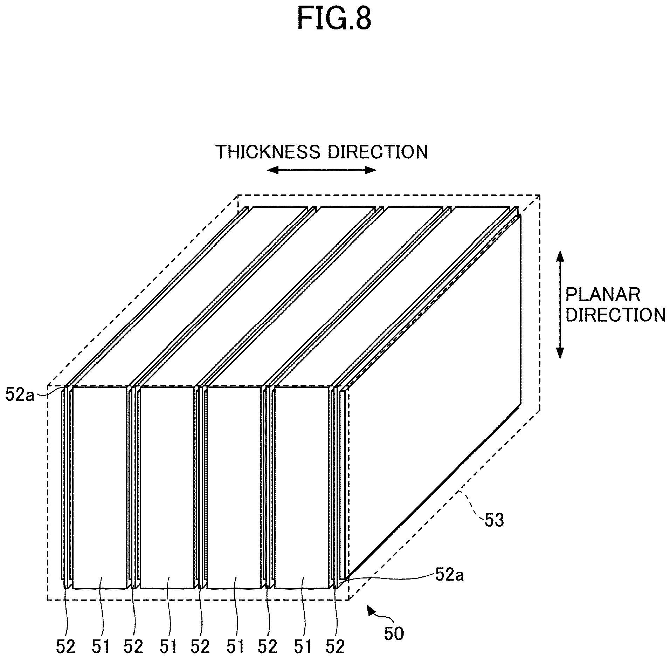

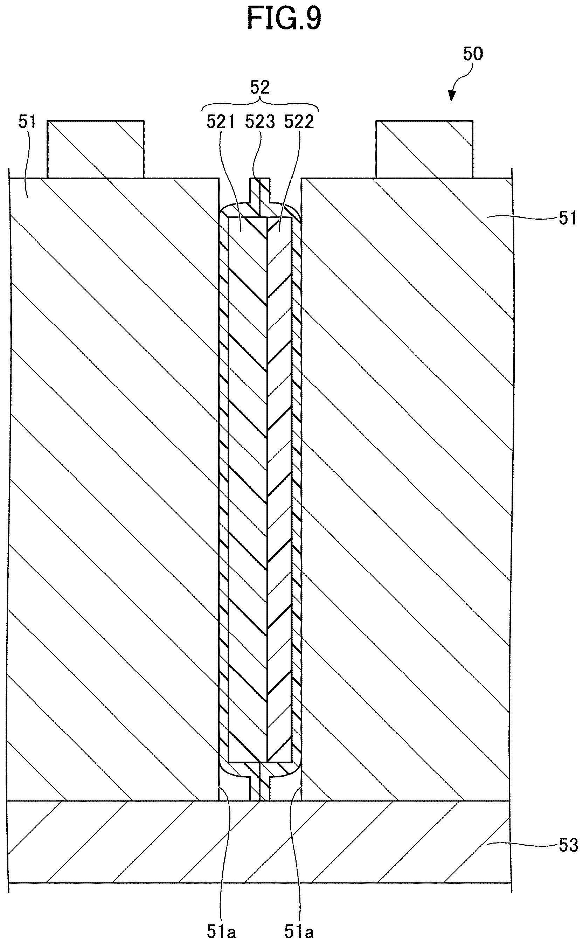

FIG. 8 is a perspective view illustrating an example of the lithium ion secondary battery, and FIG. 9 is a partial cross-sectional view of the lithium ion secondary battery. As illustrated in FIG. 8, a lithium ion secondary battery 50 includes a plurality of battery cells 51 (four in FIG. 8), a plurality of thermal insulation materials (hereinafter simply referred to as thermal insulation materials) 52 for a battery, and a housing 53. The battery cells 51 are arranged with the thermal insulation materials 52 interposed therebetween in the thickness direction of the battery cells 51 in the housing 53.

The battery cell includes a positive electrode, a negative electrode, a nonaqueous electrolyte (for example, a nonaqueous electrolysis solution or a solid electrolyte), a battery case, and a separator as necessary. The positive electrode, the negative electrode, and the nonaqueous electrolyte, and the separator as necessary are housed inside the battery case. The shape of the battery cells 51 is not particularly limited, but as illustrated in FIG. 8, each may have a substantially rectangular parallelepiped shape. The battery cells 51 are arranged so as to face each other with an interval in the thickness direction. The battery cells 51 are arranged with an interval in the thickness direction.

The number of the battery cells 51 is not particularly limited and may be appropriately set according to the size and the like of the battery cells 51 and the housing 53, but may be from 1 through 3, or 5 or more.

As illustrated in FIG. 9, each of the thermal insulation materials 52 is provided so as to contact counter surfaces 51a of the battery cells 51 between the battery cells 51, in the thickness direction of the battery cells 51. Welding parts 52a of the thermal insulation materials 52 are provided so as to contact the inner surface of the housing 53. The thermal insulation materials 52 reduce the conduction of heat between the battery cells 51. The thermal insulation material 52 may include a compression adjustment layer 521 and a thermal insulation layer 522 laminated in this order, and may include a cover layer 523 that covers the compression adjustment layer 521 and the thermal insulation layer 522. The cover layer 523 may be formed of a pair of resin films 523A and 523B. Because the compression adjustment layer 521, the thermal insulation layer 522, and the cover layer 523 are similar to the compression adjustment layer 10, the thermal insulation layer 20, and the cover layer 30 of the thermal insulation material 1 for a battery as described above, details thereof will be omitted.

In the present embodiment, the compression adjustment layer 521 is arranged so as to face one of the battery cells 51 (the battery cell 51 on the left side in the thickness direction in FIG. 9), and the thermal insulation layer 522 is arranged so as to face the other of the battery cell 51s (the battery cell 51 on the right side in the thickness direction in FIG. 9), but the direction may be reversed. As illustrated in FIG. 5, when the compression adjustment layers 521 are arranged on both of the principal surfaces of the thermal insulation layer 522 in the thermal insulation material 52, the compression adjustment layer 521 is provided so as to face both the battery cells 51.

The housing 53 houses the battery cells 51 and the thermal insulation material 52. The shape of the housing 53 is not particularly limited as long as it can house the battery cells 51 and the thermal insulation material 52, but it may have a substantially rectangular parallelepiped shape.

In the lithium ion secondary battery 50, by arranging the thermal insulation material 52 between the battery cells 51, when one of the battery cells 51 becomes hot and expands compared with the other battery cells 51, the compression adjustment layer of the thermal insulation material 52 is compressed to absorb the expansion of the one of the battery cells 51. Accordingly, the thermal insulation layer of the thermal insulation material 52 is not appreciably compressed and the thermal insulation property can be maintained, thereby reducing the influence on the other battery cells 51.

The hot and expanded battery cell 51, the deteriorated and expanded battery cell 51, and the deteriorated thermal insulation material 52 may be replaced with a new battery cell 51 or a new thermal insulation material 52 as appropriate.

Because the lithium ion secondary battery 50 includes the thermal insulation material 52 between the battery cells 51, it can exhibit the excellent cushioning property against the expansion of the battery cell 51 and have the high thermal insulation property. Therefore, the lithium ion secondary battery 50 can be safely used while reducing damage of the battery cell 51. Therefore, because the lithium ion secondary battery 50 using the thermal insulation material 1 for a battery has the characteristics described above, it can be suitably used for electrically powered vehicles such as an electric vehicle (EV), a hybrid vehicle (HV), a plug-in hybrid vehicle (PHV); portable electronic devices such as a portable terminal, a portable telephone, a laptop computer, and the like; wearable devices; and the like.

Examples

Embodiments will be described more specifically below with examples, but the embodiments are not limited by these examples.

<Manufacture of Thermal Insulation Material>

[Example 1]

(Manufacture of Thermal Insulation Layer 1)

21 parts by mass of hydrophilic fumed silica particles ("AEROSIL (registered trademark) 380", manufactured by Nippon Aerosil Co., Ltd., average primary particle diameter: approximately 7 $\mu$m, BET specific surface area: 380 $m^2$/g) and 4 parts by mass of glass fibers ("CS 25K-871", manufactured by Nitto Boseki Co., Ltd., average diameter: 13 $\mu$m, average fiber length: 25 mm), which are inorganic fibers, loosened by hand in advance to open the fibers were mixed in a plastic bag so as to disperse evenly. The obtained mixed powder was put into a breathable bag made of paper, nonwoven fabric, cloth, or woven fabric, and compression-molded by a press machine so that the density of the molded product obtained by pressing the powder inside the bag became a sheet with a density of 0.25 g/$cm^3$, thereby preparing a thermal insulation material (a thermal insulation layer), which was a molded body of the mixture containing the hydrophilic fumed silica and the glass fibers. The thickness of the obtained thermal insulation material (the thermal insulation layer) was 3.3 mm, and the density was 0.25 g/$cm^3$.
When the modulus of compressive elasticity and the compressive stress of the thermal insulation layer 1 were measured using the following measurement method of the modulus of compressive elasticity and the compressive stress of the compression adjustment layer, the compressive stress at 25% compression was 0.23 MPa.

(Manufacture of Compression Adjustment Layer)

A polypropylene (PP) foamed body (PP-Based foam sheet having a foaming ratio of 3 times (Paulownia (registered trademark)), manufactured by Mitsui Chemicals Tohcello, Inc., thickness 5 mm) was cut into the same size as the prepared thermal insulation layer 1 to obtain a compression adjustment layer. The compressive stress of the compression adjustment layer was measured by the following method. The compressive stress at 25% compression was measured.

((Compressive Stress))

The thermal insulation layer 1 was cut into a 10 mm square with a predetermined thickness to prepare a test specimen, and the compressive stress was measured using a precision universal tester (Autograph AGS-5kNX, manufactured by Shimadzu Corporation) when the test specimen was compressed by 25% at a compression rate of 0.5 mm/min.

(Manufacture of Thermal Insulation Material)

The compression adjustment layer and the thermal insulation layer prepared as described above were laminated and a thermal insulation material as illustrated in FIG. 2 was obtained.

(Ratio of Thickness of Compression Adjustment Layer to Thickness of Thermal Insulation Layer)

The thicknesses of the thermal insulation layer 1 and the compression adjustment layer were measured by a clearance gauge (a digital thickness gauge JAN-257, a gauge head $\Phi$20, manufactured by OZAKI MFG. Co., Ltd.) on the cross sections of the thermal insulation layer 1 and the compression adjustment layer. The ratio of the thickness of the compression adjustment layer to the thickness of the thermal insulation layer 1 (the thickness of the compression adjustment layer/the thickness of the thermal insulation layer 1) was approximately 1.5 (= 5 mm/3.3 mm) .
The type, thickness, and compressive stress at 25% compression of the compression adjustment layer are presented in Table 1. The type, component, type, thickness, and number of the thermal insulation layers are presented in Table 2. The configuration, total thickness, and ratio of the thickness of the compression adjustment layer to the thickness of the thermal insulation layer of the thermal insulation material are presented in Table 3.

[Example 2]

With respect to Example 1, a rigid polyurethane foam (FL140HM, manufactured by Nisshinbo Chemical Inc., having a foaming ratio of 8 times and a thickness of 15 mm) cut to a thickness of 7.2 mm was used as the compression adjustment layer. As the thermal insulation layer, instead of the thermal insulation layer 1, a thermal insulation layer 2 in which the compounding amount of the compounding component and the compression molding condition are changed as follows is used.

(Manufacture of Thermal Insulation Layer 2)

A mixed solvent containing 21 parts by mass of hydrophilic fumed silica particles ("AEROSIL (registered trademark) 380", manufactured by Nippon Aerosil Co., Ltd., average primary particle diameter: approximately 7 $\mu$m, BET specific surface area: 380 m$^2$/g), 4 parts by mass of glass fibers ("CS 25K-871", manufactured by Nitto Boseki Co., Ltd., average diameter: 13 $\mu$m, average fiber length: 25 mm), which are inorganic fibers, 83 parts by mass of acetic acid, and 17 parts by mass of water, was mixed so that a consistency was from 50 through 90. The obtained mixture liquid was evaluated by the method of measuring the consistency described below. Next, the obtained mixture liquid was applied over a base material to form a coating film having a thickness of 3.8 mm. The coating film was then compression-molded using a hot press to form a sheet having a thickness of 2 mm and a density of from 0.3 through 0.5 g/cm$^3$, and then dried at 100°C for 10 minutes, to form a thermal insulation material (a thermal insulation layer), which was a molded body of the mixture containing the hydrophilic fumed silica and the glass fiber. The thickness of the obtained thermal insulation material (the thermal insulation layer) was 1.8 mm, and the density was 0.31 g/cm$^3$. When the compressive stress of the thermal insulation layer 2 was measured using the measurement method of the compressive stress of the compression adjustment layer described above, the compressive stress at 25% compression was 2.04 MPa.

(Measurement of Consistency)

The consistency of the mixture liquids of the thermal insulation layer obtained in Examples 1 and 2 was measured as "immiscible consistency" according to the contents described in Japanese Industrial Standards JIS K 2220:2013 "Grease-Section 7: Consistency test method". Specifically, a pot having a size with which the pot would not be contacted by a conical weight when the weight would be moved down into the pot was prepared, filled with the mixture liquid, and set on a PENETRO METER manufactured by Nikka Engineering Co., Ltd. to which a weight was attached. Next, the position of the weight was adjusted to a position at which the weight and the mixture liquid would contact each other, and this position was seen as a 0 point. Then, the weight was moved down for 5 seconds ($\pm$0.1 seconds) at room temperature (25°C), and a value obtained by multiplying the depth (mm) to which the weight was intruded into the mixture liquid by 10 was calculated as the consistency. As the conical weight, a standard cone prescribed by Japanese Industrial Standards and having a whole mass of 102.5 g was used. As a holding tool of the weight, one that had a mass of 47.5$\pm$0.05 g was used.

[Example 3]

With respect to Example 1, as the compression adjustment layer, glass wool (uncured wool (600 g/m$^2$), manufactured by Asahi Fiber Glass Co., Ltd.) was heated for 10 minutes using a hot press at 180°C to thermally cure the resin in the glass wool, and the sheet was compressed and molded to a thickness of 3 mm and cut to a thickness of 2 mm. As in Example 1, the thermal insulation layer 1 having a thickness of 2 mm was prepared. Other than that, the thermal insulation material for a battery was prepared in the same manner as in Example 1.

[Example 4]

With respect to Example 3, the thickness of the thermal insulation layer 1 was changed to 1 mm, and the thermal insulation layers 1 were laminated on both the upper and lower surfaces of the compression adjustment layer to prepare a laminate body of a three-layer thermal insulation material as illustrated in FIG. 6. Other than that, the thermal insulation material for a battery was prepared in the same manner as in Example 3.

[Example 5]

With respect to Example 1, as the compression adjustment layer, a polypropylene (PP) integrated extruded hollow structure plate (Singlecone (registered trademark), TSC-5-1204BK, manufactured by Ube Exsymo Co., Ltd., thickness 5.2 mm) was used. Other than that, the thermal insulation material for a battery was prepared in the same manner as in Example 3.

[Example 6]

With respect to Example 1, as the compression adjustment layer, a modified PPE foamed body (having a foaming ratio of 10 times and a thickness of 7 mm) of modified polyphenylene ether (PPE) foamed beads (Sunforce (registered trademark), manufactured by Asahi Kasei Corporation) was cut to a thickness of 5 mm. As the thermal insulation layer, the thermal insulation layer 2 prepared by the method described in Example 2 was made to have a thickness of 2 mm. Other than that, the thermal insulation material for a battery was prepared in the same manner as in Example 1.

[Example 7]

With respect to Example 3, as the compression adjustment layer, a modified PPE foamed body (having a foaming ratio of 7 times and a thickness of 7 mm) of modified polyphenylene ether (PPE) foamed beads (Sunforce (registered trademark), manufactured by Asahi Kasei Corporation) was cut to a thickness of 2 mm. Other than that, the thermal insulation material for a battery was prepared in the same manner as in Example 3.

[Example 8]

With respect to Example 1, the thermal insulation material for a battery prepared in Example 1 was covered with two sheets of a polyester film having a thickness of 12 um and a polyethylene film having a thickness of 1 mm, with the polyethylene side facing inward, and both ends of the film were closed with a heat sealer. Other than that, the thermal insulation material for a battery was prepared in the same manner as in Example 1.

[Example 9]

With respect to Example 1, as the compression adjustment layer, glass wool (Uncured wool (700 g/m$^2$), manufactured by Asahi Fiber Glass Co., Ltd.) was heated for 10 minutes using a hot press at 180°C to thermally cure the resin in the glass wool, and the sheet was compressed and molded to a thickness of 3.6 mm. A thermal insulation layer 1 having a thickness of 2.4 mm was prepared in the same manner as in Example 1. Other than that, the thermal insulation material for a battery was prepared in the same manner as in Example 1.

[Example 10]

With respect to Example 9, the thickness of the thermal insulation layer 1 was changed to 1.2 mm, and the thermal insulation layers 1 were laminated on both the upper and lower surfaces of the compression adjustment layer to prepare a laminate body of a three-layer thermal insulation material as illustrated in FIG. 6. Other than that, the thermal insulation material for a battery was prepared in the same manner as in Example 9.

[Example 11]

With respect to Example 9, as the thermal insulation layer a thermal insulation layer 2 having a thickness of 2.4 mm was used. Other than that, the thermal insulation material for a battery was prepared in the same manner as in Example 9.

[Example 12]

With respect to Example 11, the thickness of the thermal insulation layer 2 was changed to 1.2 mm, and the thermal insulation layers 2 were laminated on both the upper and lower surfaces of the compression adjustment layer to prepare a laminate body of a three-layer thermal insulation material as illustrated in FIG. 6. Other than that, the thermal insulation material for a battery was prepared in the same manner as in Example 11.

[Example 13]

With respect to Example 11, as the compression adjustment layer, 2 layers of glass wool (Uncured wool (600 g/m$^2$), manufactured by Asahi Fiber Glass Co., Ltd.) were heated for 10 minutes using a hot press at 180°C to thermally cure the resin in the glass wool, and the sheet was compressed and molded to a thickness of 3.6 mm. Other than that, the thermal insulation material for a battery was prepared in the same manner as in Example 11.

[Example 14]

With respect to Example 13, the thickness of the thermal insulation layer 2 was changed to 1.2 mm, and the thermal insulation layers 2 were laminated on both the upper and lower surfaces of the compression adjustment layer to prepare a laminate body of a three-layer thermal insulation material as illustrated in FIG. 6. Other than that, the thermal insulation material for a battery was prepared in the same manner as in Example 13.

[Example 15]

With respect to Example 1, only the thermal insulation layer 1 having a thickness of 2 mm prepared in Example 1 was used, without the compression adjustment layer. Other than that, the thermal insulation material for a battery was prepared in the same manner as in Example 1.

[Example 16]

With respect to Example 2, the thermal insulation layer was formed such that the thickness of the thermal insulation layer 2 prepared in Example 2 was set to 2.0 mm, without the compression adjustment layer. Other than that, the thermal insulation material for a battery was prepared in the same manner as in Example 2.

[Example 17]

With respect to Example 3, as the compression adjustment layer, an ethylene-propylene-diene rubber (EPDM) foam seal material (Ept-sealer (registered trademark) EE-1000, thickness 5 mm, manufactured by Nitto Denko Corporation) was used. Other than that, the thermal insulation material for a battery was prepared in the same manner as in Example 3.

[Example 18]

With respect to Example 3, as the compression adjustment layer, 2 sheets of sheets compressed and molded to a thickness of 3 mm and cut to a thickness of 2.5 mm and 2 mm were laminated and cut to a thickness of 4.5 mm. As the thermal insulation layer, the thermal insulation layer 2 was cut to a thickness of 1.0 mm as in Example 3. Other than that, the thermal insulation material for a battery was prepared in the same manner as in Example 3.

[Example 19]

With respect to Example 18, the thickness of the thermal insulation layer 2 was changed to 0.5 mm, and the thermal insulation layers 2 were laminated on both the upper and lower surfaces of the compression adjustment layer to prepare a laminate body of a three-layer thermal insulation material as illustrated in FIG. 6. Other than that, the thermal insulation material for a battery was prepared in the same manner as in Example 18.

[Example 20]

With respect to Example 6, as the compression adjustment layer, the compression molded sheet having a thickness of 3 mm prepared in Example 3 was cut into a sheet having a thickness of 1 mm. As the thermal insulation layer, the thermal insulation layer 2 having a thickness of 2 mm prepared by the method described in Example 6 was used. Other than that, the thermal insulation material for a battery was prepared in the same manner as in Example 6.

[Example 21]

With respect to Example 20, the thickness of the thermal insulation layer 2 was changed to 1.0 mm, and the thermal insulation layers 2 were laminated on both the upper and lower surfaces of the compression adjustment layer to prepare a laminate body of a three-layer thermal insulation material laminate as illustrated in FIG. 6. Other than that, the thermal insulation material for a battery was prepared in the same manner as in Example 20.

[Example 22]

With respect to Example 6, as the compression adjustment layer, the modified PPE foamed body (having a foaming ratio of 5 times and a thickness of 7 mm) of the modified PPE foamed beads (Sunforce (registered trademark), manufactured by Asahi Kasei Corporation) was cut to a thickness of 2.0 mm. Other than that, the thermal insulation material for a battery was prepared in the same manner as in Example 6.

[Example 23]

With respect to Example 3, as the compression adjustment layer, a sheet of an inorganic foamed body (Turbo-cell, thickness 15 mm, manufactured by Sanpo Koubunshi KK) compressed and molded to a thickness of 3.0 mm at 23°C was used. Other than that, the thermal insulation material for a battery was prepared in the same manner as in Example 3.

[Example 24]

With respect to Example 6, as the compression adjustment layer, a PP embossed sheet (Corecone (registered trademark), thickness 4.5 mm, manufactured by Ube Exsymo Co., Ltd.) was used. Other than that, the thermal insulation material for a battery was prepared in the same manner as in Example 6.

[Example 25]

With respect to Example 6, as the compression adjustment layer, a flame retardant polyethylene terephthalate (PET) foamed body ((BALTEX (registered trademark) T90.150, manufactured by AIREX), having a foaming ratio of 7 times and a thickness of 5 mm) was used. Other than that, the thermal insulation material for a battery was prepared in the same manner as in Example 6.

[Example 26]

With respect to Example 6, as the compression adjustment layer, a flame retardant polyethylene terephthalate (PET) foamed body ((BALTEX (registered trademark) T90.100, manufactured by AIREX), having a foaming ratio of 9 times and a thickness of 5 mm) was used. Other than that, the thermal insulation material for a battery was prepared in the same manner as in Example 6.

[Example 27]

With respect to Example 6, as the compression adjustment layer, a polyethylene terephthalate (PET) foamed body ((BALTEX (registered trademark) T92.60, manufactured by AIREX), having a foaming ratio of 15 times and a thickness of 5 mm) was used. Other than that, the thermal insulation material for a battery was prepared in the same manner as in Example 6.

[Example 28]

With respect to Example 13, as the compression adjustment layer, glass wool (Uncured wool (1556 g/m$^2$), manufactured by Central Glass Co., Ltd.) was heated for 10 minutes using a hot press at 180°C to thermally cure the resin in the glass wool, and the sheet was compressed and molded to a thickness of 3.6 mm. Other than that, the thermal insulation material for a battery was prepared in the same manner as in Example 13.

[Example 29]

With respect to Example 6, as the compression adjustment layer, an urethane foamed body (Nippalay (registered trademark), manufactured by NHK Spring Co., Ltd.) of EH48 (density 0.48 g/cm$^3$, thickness 4.3 mm) was used. Other than that, the thermal insulation material for a battery was prepared in the same manner as in Example 6.

[Example 30]

With respect to Example 6, as the compression adjustment layer, a chloroprene rubber foamed body (Gomspor (registered trademark), manufactured by Inoac Corporation) of C-4600 (density 0.3 g/cm$^3$, thickness 3.3 mm) was used.

Other than that, the thermal insulation material for a battery was prepared in the same manner as in Example 6.

[Example 31]

With respect to Example 6, as the compression adjustment layer a styrene butadiene rubber foamed body (green rubber, manufactured by Keihan Co.,Ltd.) of KS-120 (density 0.26 $g/cm^3$, thickness 3.8 mm) was used. Other than that, the thermal insulation material for a battery was prepared in the same manner as in Example 6.

((Residual Stress))

The compression adjustment layer was cut into a 10 mm square with a predetermined thickness to prepare a test specimen. The test specimen was compressed at a compression rate of 0.5 mm/min using a precision universal tester (Autograph AGS-5kNX, manufactured by Shimadzu Corporation). When the test specimen was compressed by 25%, the compression was stopped and maintained for 20 hours. The stress after 20 hours was measured and was defined as the residual stress. The residual stress after being maintained for 20 hours in a 25% compression state was measured using the following formula (V).

((Residual Stress Estimation Method))

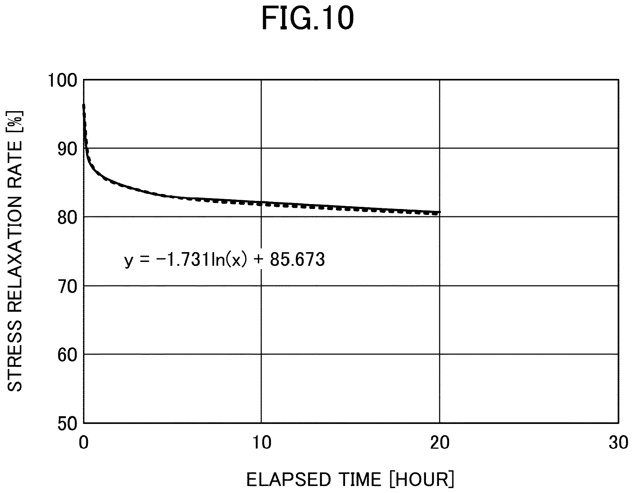

For example, the residual stress after 87,600 hours was estimated using the thermal insulation material for a battery prepared in Example 28. A graph of the stress relaxation rate (%) and the elapsed time was prepared according to the above procedure. FIG. 10 illustrates the relationship between the stress relaxation rate (%) and the elapsed time of the thermal insulation material for a battery of Example 28. As illustrated in FIG. 10, when the logarithmic approximation was selected in the approximate curve option and the equation was displayed on the graph, the following formula (V) was obtained.

$$y = -1.731\ln(x) + 85.673 \ldots(V)$$

The stress relaxation rate (%) after 87,600 hours was obtained as 66% by substituting 87,600 for x. Because the compressive stress in the initial 25% state of the compression adjustment layer in Example 28 was 2.50 MPa, by multiplying 2.50 MPa by 66%, an estimated residual stress of 1.65 MPa after 87,600 hours was obtained.

<Evaluation>

The thermal conductivity, cushioning property, residual stress rate, and residual stress after 20 hours were measured for each thermal insulation material. The results of these measurements are presented in Table 4.

(Thermal Conductivity)

The thermal conductivity was measured at 80°C under 2 MPa in accordance with "JIS A 1412-1:2016 Method for measuring thermal resistance and thermal conductivity of thermal insulation materials-Section 2: Heat flow meter method (HFM method)". The sample was prepared by cutting the thermal insulation material for a battery into the size of 20 mm×20 mm. The sample, a reference sample ("HILUC", manufactured by A&A Material Corporation, thickness 5 mm, 0.22 W/(m·K)), and an aluminum plate ("A1060P", thickness 0.2 mm) were prepared.

Next, a thermocouple 1 (a sheath thermocouple K type (SCHS1-0), a diameter of 0.15, Class JIS1, manufactured by Chino Corporation), an aluminum plate, the thermal insulation material for a battery, an aluminum plate, a thermocouple 2 (a sheath thermocouple K type (SCHS1-0), a diameter of 0.15, Class JIS1, manufactured by Chino Corporation), the reference sample, and thermocouple 3 (a sheath thermocouple K type (SCHS1-0), a diameter of 0.15, Class JIS1, manufactured by Chino Corporation) were placed in this order in the descending order on the surface of a low board of a pneumatic press machine (manufactured by Imoto Machinery Co., Ltd.), and tightly contacted with each other. The load of the press machine, of which the upper board and the lower board were heated to 80°C for the top panel and 35°C for the bottom panel, was adjusted to 800 N (corresponding to 2 MPa), and then pressurization was performed. The measurement was continued in the heating-pressurizing state until the temperatures detected by the thermocouples stabilized. It was assumed here that a temperature having stabilized means a temperature change over an around 10-minute continuous period of time being within ±0.1°C. The thermal conductivity k1 of the thermal insulation material for a battery was calculated according to the following formula (I) below based on the temperatures detected by the thermocouples after the temperature had stabilized, the thickness of the thermal insulation material for a battery under compression, and the thermal conductivity and thickness of the standard sample. The thermal conductivity was evaluated as good when it was in the range of 0.010 W/(m-K) or more and 0.080 W/(m-K) or less.

$$k1 = k2 \times (L1 \times \Delta T1) / (L2 \times \Delta T2) \quad ...(I)$$

(In the formula, k1 is the thermal conductivity [W/(m·K)] of the thermal insulation material 1 for a battery, k2 is the thermal conductivity [W/(m·K)] of the reference sample, L1 is the thickness of the thermal insulation material for a battery under pressure, L2 is the thickness of the reference sample, ΔT1 is the temperature difference between the temperature of the second thermocouple and the temperature of the third thermocouple, and ΔT2 is the temperature difference between the temperature of the first thermocouple and the temperature of the second thermocouple.)

(Cushioning Property)

By using a precision universal tester (Autograph AGS-5kNX, manufactured by Shimadzu Corporation), the deformation distance at the compressive stresses of 0.34 MPa and 3.45 MPa when the test specimen was compressed at a compression rate of 0.5 mm/min was measured. Then, the amount of displacement within the range of from 0.34 MPa through 3.45 MPa of the compressive stress (a displacement range for 0.34 MPa through 3.45 MPa) was calculated using the formula (II) below. The amount of displacement was evaluated as a cushioning property in the displacement range for 0.34 MPa through 3.45 MPa. When the displacement range for 0.34 MPa through 3.45 MPa was more than 30%, it was evaluated as good, and when the displacement range was 30% or less, it was evaluated as poor.

displacement range for 0.34 MPa through 3.45 MPa [%] = (deformation distance at 3.45 MPA/thickness of test specimen) × 100% - (deformation distance at 0.34 Mpa/thickness of test specimen) × 100%   (II)

(Residual Stress Rate)

The thermal insulation material for a battery was cut into a 10 mm square with a predetermined thickness to prepare a test specimen. The test specimen was compressed at a compression rate of 0.5 mm/min using a precision universal tester (Autograph AGS-5kNX, manufactured by Shimadzu Corporation), and the compression was stopped when the load became 100 N. The first time satisfying the following formula (1) is set as a first standing time when the compression time applying the stress of 100 N is from 0 through 19 hours. The stresses at the first standing time and after 20 hours were measured, and the residual stress rate was calculated using the following formula (2).

When the residual stress rate was 90% or more, it was evaluated as good, and when the residual stress rate was less than 90%, it was evaluated as poor.

(residual stress after n hours - residual stress after (n + 1) hours) / 1 hour ≤ 1   (1)

residual stress rate [%] = (residual stress after 20 hours with respect to compression time) / (residual stress at first standing time) × 100   (2)

(Residual Stress After 20 Hours)

The thermal insulation material for a battery was cut into a 10 mm square with a predetermined thickness to prepare a test specimen. The test specimen was compressed at a compression rate of 0.5 mm/min using a precision universal tester (Autograph AGS-5kNX, manufactured by Shimadzu Corporation), and the compression was stopped when the load became 100 N. While maintaining the state, the residual stress after 20 hours was measured. When the residual stress after 20 hours was 0.34 MPa or more, it was evaluated as good, and when the residual stress was less than 0.34 MPa, it was evaluated as poor.

[Table 1]

| | | COMPRESSION ADJUSTMENT LAYER | | |
|---|---|---|---|---|
| | | TYPE | THICKNESS [mm] | COMPRESSIVE STRESS AT 25% COMPRESSION [MPa] |
| EXAMPLE 1 | PP FOAMED BODY (3 TIMES) | | 5.0 | 1.18 |
| EXAMPLE 2 | RIGID POLYURETHANE FOAM (FOAMING RATIO OF 8 TIMES) | | 7.2 | 1.35 |
| EXAMPLE 3 | GLASS WOOL (600 g/m²) | | 2.0 | 0.53 |
| EXAMPLE 4 | GLASS WOOL (600 g/m²) | | 2.0 | 0.53 |
| EXAMPLE 5 | INTEGRALLY EXTRUDED HOLLOW STRUCTURAL BOARD MADE OF PP | | 5.0 | 0.95 |
| EXAMPLE 6 | MODIFIED PPE FOAMED BODY (FOAMING RATIO OF 10 TIMES) | | 5.0 | 1.23 |
| EXAMPLE 7 | MODIFIED PPE FOAMED BODY (7 TIMES) | | 2.0 | 1.95 |
| EXAMPLE 8 | PP FOAMED BODY (3 TIMES) | | 5.0 | 1.18 |
| EXAMPLE 9 | GLASS WOOL (700 g/m²) | | 3.6 | 0.50 |
| EXAMPLE 10 | GLASS WOOL (700 g/m²) | | 3.6 | 0.50 |
| EXAMPLE 11 | GLASS WOOL (700 g/m²) | | 3.6 | 0.50 |
| EXAMPLE 12 | GLASS WOOL (700 g/m²) | | 3.6 | 0.50 |
| EXAMPLE 13 | GLASS WOOL (1200 g/m²) | | 3.6 | 0.98 |
| EXAMPLE 14 | GLASS WOOL (1200 g/m²) | | 3.6 | 0.98 |
| EXAMPLE 15 | NONE | | - | - |
| EXAMPLE 16 | NONE | | - | - |
| EXAMPLE 17 | FOAM SEALANT MADE OF EPDM (FOAMING RATIO OF 10 TIMES) | | 5.0 | 0.01 |
| EXAMPLE 18 | GLASS WOOL (600 g/m²) | | 4.5 | 0.53 |
| EXAMPLE 19 | GLASS WOOL (600 g/m²) | | 4.5 | 0.53 |
| EXAMPLE 20 | GLASS WOOL (600 g/m²) | | 1.0 | 0.53 |
| EXAMPLE 21 | GLASS WOOL (600 g/m²) | | 1.0 | 0.53 |
| EXAMPLE 22 | MODIFIED PPE FOAMED BODY (FOAMING RATIO OF 5 TIMES) | | 2.0 | 5.00 |
| EXAMPLE 23 | INORGANIC FOAMED BODY | | 3.0 | 0.06 |

(continued)

| | COMPRESSION ADJUSTMENT LAYER | | |
|---|---|---|---|
| | TYPE | THICKNESS [mm] | COMPRESSIVE STRESS AT 25% COMPRESSION [MPa] |
| EXAMPLE 24 | EMBOSSED SHEET MADE OF PP | 4.5 | 2.70 |
| EXAMPLE 25 | FLAME RETARDANT PET FOAMED BODY (FOAMING RATIO OF 7 TIMES) | 5.0 | 1.43 |
| EXAMPLE 26 | FLAME RETARDANT PET FOAMED BODY (FOAMING RATIO OF 9 TIMES) | 5.0 | 1.65 |
| EXAMPLE 27 | PET FOAMED BODY (FOAMING RATIO OF 15 TIMES) | 5.0 | 0.30 |
| EXAMPLE 28 | GLASS WOOL (1556 g/m$^2$) | 3.6 | 1.80 |
| EXAMPLE 29 | URETHANE FOAMED BODY (DENSITY 0.48 g/cm$^3$) | 4.3 | 0.40 |
| EXAMPLE 30 | CHLOROPRENE RUBBER FOAMED BODY (DENSITY 0.3 g/cm$^3$) | 3.3 | 0.31 |
| EXAMPLE 31 | STYRENE BUTADIENE RUBBER FOAMED BODY (DENSITY 0.26 g/cm$^3$) | 3.8 | 0.23 |

[Table 2]

| | | THERMAL INSULATION LAYER | | | | | |
|---|---|---|---|---|---|---|---|
| | TYPE | COMPONENT | | TYPE | THICKNESS [mm] | COMPRESSIVE STRESS AT 25% COMPRESSION [MPa] | NUMBER |
| EXAMPLE 1 | THERMAL INSULATION LAYER 1 | GLASS FIBER | FUMED SILICA PARTICLE | LOW DENSITY TYPE | 3.3 | 0.23 | 1 |
| EXAMPLE 2 | THERMAL INSULATION LAYER 2 | GLASS FIBER | FUMED SILICA PARTICLE | HIGH DENSITY TYPE | 1.8 | 2.04 | 1 |
| EXAMPLE 3 | THERMAL INSULATION LAYER 1 | GLASS FIBER | FUMED SILICA PARTICLE | LOW DENSITY TYPE | 2.0 | 0.23 | 1 |
| EXAMPLE 4 | THERMAL INSULATION LAYER 1 | GLASS FIBER | FUMED SILICA PARTICLE | LOW DENSITY TYPE | 1.0 | 0.23 | 2 |
| EXAMPLE 5 | THERMAL INSULATION LAYER 1 | GLASS FIBER | FUMED SILICA PARTICLE | LOW DENSITY TYPE | 2.0 | 0.23 | 1 |
| EXAMPLE 6 | THERMAL INSULATION LAYER 2 | GLASS FIBER | FUMED SILICA PARTICLE | HIGH DENSITY TYPE | 2.0 | 2.04 | 1 |
| EXAMPLE 7 | THERMAL INSULATION LAYER 1 | GLASS FIBER | FUMED SILICA PARTICLE | LOW DENSITY TYPE | 2.0 | 0.23 | 1 |
| EXAMPLE 8 | THERMAL INSULATION LAYER 1 | GLASS FIBER | FUMED SILICA PARTICLE | LOW DENSITY TYPE | 3.3 | 0.23 | 1 |
| EXAMPLE 9 | THERMAL INSULATION LAYER 1 | GLASS FIBER | FUMED SILICA PARTICLE | LOW DENSITY TYPE | 2.4 | 0.23 | 1 |
| EXAMPLE 10 | THERMAL INSULATION LAYER 1 | GLASS FIBER | FUMED SILICA PARTICLE | LOW DENSITY TYPE | 1.2 | 0.23 | 2 |
| EXAMPLE 11 | THERMAL INSULATION LAYER 2 | GLASS FIBER | FUMED SILICA PARTICLE | HIGH DENSITY TYPE | 2.4 | 2.04 | 1 |
| EXAMPLE 12 | THERMAL INSULATION LAYER 2 | GLASS FIBER | FUMED SILICA PARTICLE | HIGH DENSITY TYPE | 1.2 | 2.04 | 2 |
| EXAMPLE 13 | THERMAL INSULATION LAYER 2 | GLASS FIBER | FUMED SILICA PARTICLE | HIGH DENSITY TYPE | 2.4 | 2.04 | 1 |
| EXAMPLE 14 | THERMAL INSULATION LAYER 2 | GLASS FIBER | FUMED SILICA PARTICLE | HIGH DENSITY TYPE | 1.2 | 2.04 | 2 |

(continued)

| | THERMAL INSULATION LAYER | | | | | |
|---|---|---|---|---|---|---|
| | TYPE | COMPONENT | | TYPE | THICKNESS [mm] | COMPRESSIVE STRESS AT 25% COMPRESSION [MPa] | NUMBER |
| EXAMPLE 15 | THERMAL INSULATION LAYER 1 | GLASS FIBER | FUMED SILICA PARTICLE | HIGH DENSITY TYPE | 2.0 | 2.04 | 1 |
| EXAMPLE 16 | THERMAL INSULATION LAYER 2 | GLASS FIBER | FUMED SILICA PARTICLE | LOW DENSITY TYPE | 2.0 | 0.23 | 1 |
| EXAMPLE 17 | THERMAL INSULATION LAYER 1 | GLASS FIBER | FUMED SILICA PARTICLE | LOW DENSITY TYPE | 2.0 | 0.23 | 1 |
| EXAMPLE 18 | INSULATION THERMAL LAYER 2 | GLASS FIBER | FUMED SILICA PARTICLE | HIGH DENSITY TYPE | 1.0 | 2.04 | 1 |
| EXAMPLE 19 | THERMAL INSULATION LAYER 2 | GLASS FIBER | FUMED SILICA PARTICLE | HIGH DENSITY TYPE | 0.5 | 2.04 | 2 |
| EXAMPLE 20 | THERMAL INSULATION LAYER 2 | GLASS FIBER | FUMED SILICA PARTICLE | HIGH DENSITY TYPE | 2.0 | 2.04 | 1 |
| EXAMPLE 21 | THERMAL INSULATION LAYER 2 | GLASS FIBER | FUMED SILICA PARTICLE | HIGH DENSITY TYPE | 1.0 | 2.04 | 2 |
| EXAMPLE 22 | THERMAL INSULATION LAYER 1 | GLASS FIBER | FUMED SILICA PARTICLE | LOW DENSITY TYPE | 2.0 | 0.23 | 1 |
| EXAMPLE 23 | THERMAL INSULATION LAYER 1 | GLASS FIBER | FUMED SILICA PARTICLE | LOW DENSITY TYPE | 2.0 | 0.23 | 1 |
| EXAMPLE 24 | THERMAL INSULATION LAYER 2 | GLASS FIBER | FUMED SILICA PARTICLE | HIGH DENSITY TYPE | 2.0 | 2.04 | 1 |
| EXAMPLE 25 | THERMAL INSULATION LAYER 2 | GLASS FIBER | FUMED SILICA PARTICLE | HIGH DENSITY TYPE | 2.0 | 2.04 | 1 |
| EXAMPLE 26 | THERMAL INSULATION LAYER 2 | GLASS FIBER | FUMED SILICA PARTICLE | HIGH DENSITY TYPE | 2.0 | 2.04 | 1 |
| EXAMPLE 27 | THERMAL INSULATION LAYER 2 | GLASS FIBER | FUMED SILICA PARTICLE | HIGH DENSITY TYPE | 2.0 | 2.04 | 1 |
| EXAMPLE 28 | THERMAL INSULATION LAYER 2 | GLASS FIBER | FUMED SILICA PARTICLE | HIGH DENSITY TYPE | 2.4 | 2.04 | 1 |

(continued)

| | THERMAL INSULATION LAYER | | | | | |
|---|---|---|---|---|---|---|
| | TYPE | COMPONENT | | TYPE | THICKNESS [mm] | COMPRESSIVE STRESS AT 25% COMPRESSION [MPa] | NUMBER |
| EXAMPLE 29 | THERMAL INSULATION LAYER 2 | GLASS FIBER | FUMED SILICA PARTICLE | HIGH DENSITY TYPE | 2.0 | 2.04 | 1 |
| EXAMPLE 30 | THERMAL INSULATION LAYER 2 | GLASS FIBER | FUMED SILICA PARTICLE | HIGH DENSITY TYPE | 2.0 | 2.04 | 1 |
| EXAMPLE 31 | THERMAL INSULATION LAYER 2 | GLASS FIBER | FUMED SILICA PARTICLE | HIGH DENSITY TYPE | 2.0 | 2.04 | 1 |

[Table 3]

| | THERMAL INSULATION MATERIAL | | |
| --- | --- | --- | --- |
| | CONFIGURATION | TOTAL THICKNESS [mm] | RATIO OF CUSHION LAYER THICKNESS TO THERMAL INSULATION LAYER THICKNESS (CUSHION LAYER THICKNESS/ THERMAL INSULATION LAYER THICKNESS) |
| EXAMPLE 1 | FIG. 2 | 8.8 | 1.5 |
| EXAMPLE 2 | FIG. 2 | 9.0 | 4.0 |
| EXAMPLE 3 | FIG. 2 | 4.0 | 1.0 |
| EXAMPLE 4 | FIG. 6 | 4.0 | 1.0 |
| EXAMPLE 5 | FIG. 2 | 7.0 | 2.5 |
| EXAMPLE 6 | FIG. 2 | 7.0 | 2.5 |
| EXAMPLE 7 | FIG. 2 | 4.0 | 1.0 |
| EXAMPLE 8 | FIG. 2 | 8.8 | 1.5 |
| EXAMPLE 9 | FIG. 2 | 6.0 | 1.5 |
| EXAMPLE 10 | FIG. 6 | 6.0 | 1.5 |
| EXAMPLE 11 | FIG. 2 | 6.0 | 1.5 |
| EXAMPLE 12 | FIG. 6 | 6.0 | 1.5 |
| EXAMPLE 13 | FIG. 2 | 6.0 | 1.5 |
| EXAMPLE 14 | FIG. 6 | 6.0 | 1.5 |
| EXAMPLE 15 | FIG. 2 | 2.0 | - |
| EXAMPLE 16 | FIG. 2 | 2.0 | - |
| EXAMPLE 17 | FIG. 2 | 7.0 | 2.5 |
| EXAMPLE 18 | FIG. 2 | 5.5 | 4.5 |
| EXAMPLE 19 | FIG. 6 | 5.5 | 4.5 |
| EXAMPLE 20 | FIG. 2 | 3.0 | 0.5 |
| EXAMPLE 21 | FIG. 6 | 3.0 | 0.5 |
| EXAMPLE 22 | FIG. 2 | 4.0 | 1.0 |
| EXAMPLE 23 | FIG. 2 | 5.0 | 1.5 |
| EXAMPLE 24 | FIG. 2 | 6.5 | 2.3 |

(continued)

| | THERMAL INSULATION MATERIAL | | |
|---|---|---|---|
| | CONFIGURATION | TOTAL THICKNESS [mm] | RATIO OF CUSHION LAYER THICKNESS TO THERMAL INSULATION LAYER THICKNESS (CUSHION LAYER THICKNESS/ THERMAL INSULATION LAYER THICKNESS) |
| EXAMPLE 25 | FIG. 2 | 7.0 | 2.5 |
| EXAMPLE 26 | FIG. 2 | 7.0 | 2.5 |
| EXAMPLE 27 | FIG. 2 | 7.0 | 2.5 |
| EXAMPLE 28 | FIG. 2 | 6.0 | 1.5 |
| EXAMPLE 29 | FIG. 2 | 5.0 | 1.5 |
| EXAMPLE 30 | FIG. 2 | 6.0 | 2.0 |
| EXAMPLE 31 | FIG. 2 | 5.8 | 1.9 |

[Table 4]

| | THERMAL INSULATION MATERIAL | | | | |
|---|---|---|---|---|---|
| | THERMAL CONDUCTIVITY [W/(m·K)] (80°C, 2 MPa) | CUSHIONING PROPERTY (0.34 to 3.45 MPa DISPLACEMENT RANGE [%]) | RESIDUAL STRESS RATE [%] | RESIDUAL STRESS AFTER 20 HOURS [MPa] | FIRST STANDING TIME [HOURS] |
| EXAMPLE 1 | 0.056 | 44 | 90 | 0.43 | 4 |
| EXAMPLE 2 | 0.059 | 55 | 92 | 0.54 | 4 |
| EXAMPLE 3 | 0.051 | 38 | 96 | 0.53 | 5 |
| EXAMPLE 4 | 0.052 | 38 | 97 | 0.52 | 5 |
| EXAMPLE 5 | 0.038 | 56 | 90 | 0.36 | 5 |
| EXAMPLE 6 | 0.059 | 56 | 91 | 0.57 | 3 |
| EXAMPLE 7 | 0.043 | 46 | 92 | 0.60 | 4 |
| EXAMPLE 8 | 0.057 | 45 | 91 | 0.44 | 4 |
| EXAMPLE 9 | 0.043 | 40 | 95 | 0.55 | 5 |
| EXAMPLE 10 | 0.044 | 40 | 95 | 0.56 | 5 |
| EXAMPLE 11 | 0.041 | 35 | 91 | 0.57 | 5 |
| EXAMPLE 12 | 0.040 | 35 | 91 | 0.59 | 5 |
| EXAMPLE 13 | 0.054 | 38 | 98 | 0.57 | 5 |
| EXAMPLE 14 | 0.056 | 38 | 98 | 0.57 | 5 |
| EXAMPLE 15 | 0.033 | 20 | 92 | 0.68 | 4 |
| EXAMPLE 16 | 0.031 | 30 | 96 | 0.66 | 5 |
| EXAMPLE 17 | 0.089 | 7 | 85 | 0.46 | 5 |
| EXAMPLE 18 | 0.081 | 37 | 94 | 0.59 | 4 |
| EXAMPLE 19 | 0.083 | 37 | 93 | 0.57 | 4 |
| EXAMPLE 20 | 0.056 | 24 | 96 | 0.73 | 3 |
| EXAMPLE 21 | 0.053 | 24 | 95 | 0.72 | 3 |
| EXAMPLE 22 | 0.041 | 16 | 96 | 0.73 | 3 |
| EXAMPLE 23 | 0.054 | 30 | 89 | 0.50 | 4 |
| EXAMPLE 24 | 0.080 | 68 | 77 | 0.30 | 5 |
| EXAMPLE 25 | 0.079 | 31 | 95 | 0.73 | 3 |
| EXAMPLE 26 | 0.069 | 57 | 94 | 0.69 | 3 |
| EXAMPLE 27 | 0.069 | 49 | 93 | 0.59 | 4 |
| EXAMPLE 28 | 0.056 | 30 | 98 | 0.72 | 3 |
| EXAMPLE 29 | 0.054 | 31 | 95 | 0.57 | 4 |
| EXAMPLE 30 | 0.049 | 29 | 86 | 0.41 | 7 |
| EXAMPLE 31 | 0.056 | 23 | 94 | 0.53 | 5 |

From Table 4, in Examples 1 to 14 and 25 to 29, the thermal conductivity was 0.080 W/(m·K) or less, the displacement range for 0.34 MPa through 3.45 MPa was 31% or more, the residual stress rate was 90% or more, and the residual stress after 20 hours was 0.36 MPa or more, all of which satisfied the standard. In contrast, in Examples 15 to 24, 30, and 31, one or more of the thermal conductivity, the displacement range for 0.34 MPa through 3.45 MPa, the residual stress rate, and the residual stress after 20 hours did not satisfy the standard.

Therefore, it was confirmed that the thermal insulation materials for a battery of Examples 1 to 14 and 25 to 29, unlike the thermal insulation materials for a battery of Example 15 to 24, can flexibly deform against the expansion of the battery cell, by setting the ratio of the thickness of the compression adjustment layer to the thickness of the thermal insulation layer to from 1.0 through 4.0 and the compressive stress when the compression adjustment layer is compressed and deformed at any rate within the range of from 25% through 70% in the thickness direction with respect to the thickness before compression to from 0.50 MPa through 3.36 MPa, thereby exhibiting an excellent cushioning property and having a high thermal insulation property. Therefore, when the thermal insulation materials for a battery of Examples 1 to 14 and 25 to 29 are applied to a lithium ion secondary battery, even when the battery cell repeatedly expands and contracts due to charging and discharging, the battery cell can be prevented from being damaged, and heat generated by thermal expansion or the like of one battery cell can be prevented from being transferred to other adjacent battery cells, thereby enhancing safety. Therefore, the lithium ion secondary battery using the thermal insulation materials for a battery of Examples 1 to 14 and 25 to 29 can be safely used for a long time.

It can be said that the thermal insulation material for a battery of each example has similar performance in use or removal after assembly into a nonaqueous electrolyte secondary battery, when the predetermined values of the ratio of the thickness of the compression adjustment layer to the thickness of the thermal insulation layer; the compressive stress of the compression adjustment layer; and the thermal conductivity, cushioning property, residual stress rate, and residual stress after 20 hours of the thermal insulation materials for a battery; are respectively satisfied.

The embodiment has been described above. However, the embodiment described above has been presented as an example, and the present invention is not to be limited by the embodiment described above. The embodiment described above can be carried out in various other modes, and various combinations, omissions, replacements, modifications, and the like are applicable within the scope of the spirit of the invention. The embodiment and modifications thereof are included in the scope and spirit of the invention, and are included in the scope of the invention described in the claims and equivalents thereof.

Aspects of the embodiment of the present invention are, for example, as follows.

<1> A thermal insulation material for a battery including:

a compression adjustment layer and a thermal insulation layer laminated to each other, wherein
a ratio of a thickness of the compression adjustment layer to a thickness of the thermal insulation layer is more than 0.5 and less than 4.5, and
a compressive stress is from 0.34 MPa through 3.45 MPa when the compression adjustment layer is compressed and deformed at any rate within a range of from 25% through 70% in a thickness direction with respect to a thickness before compression.

<2> The thermal insulation material for a battery according to <1>,
further comprising a cover layer that covers at least the thermal insulation layer.
<3> The thermal insulation material for a battery according to <1> or <2>,
wherein the thermal insulation layer includes at least one of fumed silica, colloidal silica, precipitated silica, or silica aerogel.
<4> The thermal insulation material for a battery according to any one of <1> to <3>,
wherein a thickness of the compression adjustment layer is from 1.0 mm through 8.8 mm.
<5> The thermal insulation material for a battery according to any one of <1> to <4>,

wherein when a first time satisfying a following formula (1) is set as a first standing time when a compression time applying a stress of 100 N is from 0 through 19 hours, a residual stress rate calculated by a following formula (2) is 90% or more, and a residual stress after 20 hours with respect to the compression time is 0.34 MPa or more.

$$\text{(residual stress after n hours - residual stress after (n + 1) hours) / 1 hour} \leq 1 \qquad (1)$$

$$\text{residual stress rate [\%]} = \text{(residual stress after 20 hours with respect to compression time) / (residual stress at first standing time)} \times 100 \qquad (2)$$

(where, in the formula (1), n is an integer of from 1 through 19.)

<6> A nonaqueous electrolyte secondary battery including the thermal insulation material for a battery of any one of <1> to <5>.

<7> The nonaqueous electrolyte secondary battery according to <6>,

further comprising a plurality of battery cells provided adjacent to each other, wherein
the thermal insulation material for a battery is provided between the battery cells.

The present application claims priority to Japanese Patent Application No. 2021-160489, filed September 30, 2021, and Japanese Patent Application No. 2022-27674, filed February 25, 2022, with the Japanese Patent Office, the contents of which are incorporated herein by reference in their entirety.

Reference Signs List

| 1, 52 | thermal insulation material for a battery |
|---|---|
| 10, 521 | compression adjustment layer |
| 20, 522 | thermal insulation layer |
| 30, 523 | cover layer |
| 50 | lithium ion secondary battery |
| 51 | battery cell |
| 53 | housing |

**Claims**

1. A thermal insulation material for a battery, comprising:

   a compression adjustment layer and a thermal insulation layer laminated to each other, wherein
   a ratio of a thickness of the compression adjustment layer to a thickness of the thermal insulation layer is more than 0.5 and less than 4.5, and
   a compressive stress is from 0.34 MPa through 3.45 MPa when the compression adjustment layer is compressed and deformed at any rate within a range of from 25% through 70% in a thickness direction with respect to a thickness before compression.

2. The thermal insulation material for a battery according to claim 1,
   further comprising a cover layer that covers at least the thermal insulation layer.

3. The thermal insulation material for a battery according to claim 1,
   wherein the thermal insulation layer includes at least one of fumed silica, colloidal silica, precipitated silica, or silica aerogel.

4. The thermal insulation material for a battery according to claim 1,
   wherein a thickness of the compression adjustment layer is from 1.0 mm through 8.8 mm.

5. The thermal insulation material for a battery according to claim 1,

   wherein when a first time satisfying a following formula (1) is set as a first standing time when a compression time applying a stress of 100 N is from 0 through 19 hours, a residual stress rate calculated by a following formula (2) is 90% or more, and a residual stress after 20 hours with respect to the compression time is 0.34 MPa or more.

   (residual stress after n hours - a residual stress after (n+1) hours)/1 hour $\leq$ 1        (1)

the residual stress rate [%] = (the residual stress after 20 hours with respect to the compression time) / (a residual stress at the first standing time) × 100     (2)

(where, in the formula (1), n is an integer of from 1 through 19.)

6. A nonaqueous electrolyte secondary battery comprising the thermal insulation material for a battery of claim 1.

7. The nonaqueous electrolyte secondary battery according to claim 6,

    further comprising a plurality of battery cells provided adjacent to each other, wherein
    the thermal insulation material for a battery is provided between the battery cells.

# FIG.1

# FIG.2

# FIG.3

# FIG.4

# FIG.5

# FIG.6

# FIG.7

# FIG.8

THICKNESS DIRECTION

PLANAR DIRECTION

52a

53

52a

50

52 51 52 51 52 51 52 51 52

# FIG.9

# FIG.10

$y = -1.731\ln(x) + 85.673$

## INTERNATIONAL SEARCH REPORT

| International application No. |
|---|
| **PCT/JP2022/036038** |

### A. CLASSIFICATION OF SUBJECT MATTER

*H01M 50/293*(2021.01)i; *H01M 10/613*(2014.01)i; *H01M 10/623*(2014.01)i; *H01M 10/625*(2014.01)i; *H01M 10/647*(2014.01)i; *H01M 10/6555*(2014.01)i; *H01M 10/658*(2014.01)i; *H01M 50/204*(2021.01)i; *H01M 50/209*(2021.01)i; *H01M 50/291*(2021.01)i

FI: H01M50/293; H01M10/6555; H01M10/613; H01M50/291; H01M50/204 401H; H01M50/209; H01M10/625; H01M10/623; H01M10/647; H01M10/658

According to International Patent Classification (IPC) or to both national classification and IPC

### B. FIELDS SEARCHED

Minimum documentation searched (classification system followed by classification symbols)

H01M50/293; H01M10/613; H01M10/623; H01M10/625; H01M10/647; H01M10/6555; H01M10/658; H01M50/204; H01M50/209; H01M50/291

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/26208 A1 (SANYO ELECTRIC CO., LTD.) 30 December 2020 (2020-12-30) fig. 1-2, 5-6, paragraphs [0031]-[0044] | 1, 3-4, 6-7 |
| Y | | 2 |
| A | | 5 |
| Y | JP 2020-187869 A (IBIDEN CO., LTD.) 19 November 2020 (2020-11-19) fig. 3, paragraph [0038] | 2 |
| A | | 1, 3-7 |
| A | JP 2016-534518 A (GOGORO INC) 04 November 2016 (2016-11-04) fig. 3, paragraphs [0042]-[0043] | 1-7 |
| A | CN 212517391 U (CHINA AVIATION LITHIUM BATTERY RESEARCH INSTITUTE CO., LTD.) 09 February 2021 (2021-02-09) fig. 1, 6, paragraph [0037] | 1-7 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/036038**

### C. DOCUMENTS CONSIDERED TO BE RELEVANT

| Category* | Citation of document, with indication, where appropriate, of the relevant passages | Relevant to claim No. |
|---|---|---|
| A | CN 212659611 U (CHANGZHOU RED FAIRY PRECISION TECHNOLOGY CO., LTD.) 05 March 2021 (2021-03-05)<br>fig. 1, 6-7, paragraph [0055] | 1-7 |

Form PCT/ISA/210 (second sheet) (January 2015)

INTERNATIONAL SEARCH REPORT
Information on patent family members

International application No.

**PCT/JP2022/036038**

| Patent document cited in search report | | | Publication date (day/month/year) | Patent family member(s) | | | Publication date (day/month/year) |
|---|---|---|---|---|---|---|---|
| WO | 2020/262081 | A1 | 30 December 2020 | US 2022/0255182 A1 fig. 1-2, 5-6, paragraphs [0053]-[0061] CN 113906615 A | | | |
| JP | 2020-187869 | A | 19 November 2020 | (Family: none) | | | |
| JP | 2016-534518 | A | 04 November 2016 | US 2015/0064514 A1 fig. 3, paragraphs [0057]-[0058] WO 2015/031761 A1 EP 3039731 A1 TW 201523970 A CN 105849933 A | | | |
| CN | 212517391 | U | 09 February 2021 | (Family: none) | | | |
| CN | 212659611 | U | 05 March 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000048867 A
- CA 1190279
- JP 2021160489 A
- JP 2022027674 A